(19) Europäisches Patentamt / European Patent Office / Office européen des brevets

(11) **EP 3 040 691 A1**

(12) **EUROPEAN PATENT APPLICATION**

(43) Date of publication:
**06.07.2016 Bulletin 2016/27**

(51) Int Cl.:
***G01F 17/00*** *(2006.01)*

(21) Application number: **14200693.1**

(22) Date of filing: **31.12.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Nokia Technologies OY**
**02610 Espoo (FI)**

(72) Inventor: **Seko, Shigeyuki**
**Campbell, CA California 95008 (US)**

(74) Representative: **Nokia Corporation**
**Intellectual Property Department**
**Karakaari 7**
**02610 Espoo (FI)**

(54) **Determination of volumetric capacity**

(57) A method comprising causing actuation of an actuator in an enclosed volume by a predetermined actuation volume, receiving, from a sensor, sensor information that indicates a pressure change within the enclosed volume in response to the actuation, the pressure change comprising a pressure change magnitude, and determining a volumetric capacity of the enclosed volume based, at least in part, on the pressure change magnitude, a predetermined pressure change magnitude, and a reference volumetric capacity is disclosed.

FIG. 4A

EP 3 040 691 A1

# EP 3 040 691 A1

**Description**

## TECHNICAL FIELD

The present application relates generally to determination of volumetric capacity.

## BACKGROUND

In recent times, electronic apparatuses have become increasingly pervasive in our society. In many circumstances, a user may often interact with electronic apparatuses and/or electronic apparatus peripherals in performance of various activities, in various contexts, and/or the like. As such, it may be desirable to configure an apparatus such that a user of the apparatus may interact with the electronic apparatus, other electronic apparatuses, and/or electronic apparatus peripherals in a manner that avoids confusion and delay.

## SUMMARY

Various aspects of examples of the subject matter are set out in the claims.

One or more example embodiments may provide an apparatus, a computer readable medium, a non-transitory computer readable medium, a computer program product, and/or a method for causing actuation of an actuator in an enclosed volume by a predetermined actuation volume, receiving, from a sensor, sensor information that indicates a pressure change within the enclosed volume in response to the actuation, the pressure change comprising a pressure change magnitude, and determining a volumetric capacity of the enclosed volume based, at least in part, on the pressure change magnitude, a predetermined pressure change magnitude, and a reference volumetric capacity.

One or more example embodiments may provide an apparatus, a computer readable medium, a computer program product, and/or a non-transitory computer readable medium having means for causing actuation of an actuator in an enclosed volume by a predetermined actuation volume, means for receiving, from a sensor, sensor information that indicates a pressure change within the enclosed volume in response to the actuation, the pressure change comprising a pressure change magnitude, and means for determining a volumetric capacity of the enclosed volume based, at least in part, on the pressure change magnitude, a predetermined pressure change magnitude, and a reference volumetric capacity.

An apparatus comprising at least one processor and at least one memory, the memory comprising machine-readable instructions, that when executed cause the apparatus to actuate an actuator in an enclosed volume by a predetermined actuation volume, receipt, from a sensor, of sensor information that indicates a pressure change within the enclosed volume in response to the actuation, the pressure change comprising a pressure change magnitude, and determination of a volumetric capacity of the enclosed volume based, at least in part, on the pressure change magnitude, a predetermined pressure change magnitude, and a reference volumetric capacity.

In at least one example embodiment, the sensor is a pressure sensor, the sensor information is pressure sensor information, and the pressure sensor information indicates a change in pressure that has the pressure change magnitude.

In at least one example embodiment, the actuation is a periodic actuation.

In at least one example embodiment, the actuation of the actuator is performed such that the periodic actuation causes a periodic change in volume of the enclosed volume by the predetermined actuation volume.

In at least one example embodiment, the sensor information is periodic sensor information.

In at least one example embodiment, the pressure change within the enclosed volume corresponds with the periodic actuation.

In at least one example embodiment, the sensor is a pressure sensor, the sensor information is periodic pressure sensor information, and the periodic pressure sensor information indicates a change in pressure that has the pressure change magnitude.

In at least one example embodiment, the pressure change magnitude corresponds with an amplitude of the periodic pressure sensor information.

In at least one example embodiment, the pressure change magnitude is double the amplitude of the periodic pressure sensor information.

One or more example embodiments further perform determination of the pressure change magnitude based, at least in part, on the sensor information.

In at least one example embodiment, determining the pressure change magnitude comprises filtering the sensor information based, at least in part, on the periodic actuation.

In at least one example embodiment, the enclosed volume is an enclosed container.

In at least one example embodiment, the reference volumetric capacity is indicative of a predetermined amount of volume of the enclosed container that is absent a predetermined volume of one or more contained objects.

In at least one example embodiment, the predetermined pressure change magnitude is indicative of the reference volumetric capacity of the enclosed volume.

In at least one example embodiment, the reference volumetric capacity is indicative of a predetermined amount of volume of the enclosed volume that is absent a predetermined volume of one or more contained objects.

In at least one example embodiment, a contained object is an object within the enclosed container.

In at least one example embodiment, the object within the enclosed container is separate and distinct from the enclosed container.

In at least one example embodiment, the predetermined volume of the contained objects is based, at least in part, on at least one of a static value, or a calibration value.

In at least one example embodiment, the volumetric capacity is indicative of an amount of volume of the enclosed volume that is absent a volume of one or more contained objects.

In at least one example embodiment, the actuation of the actuator is performed such that the actuation causes a change in volume of the enclosed volume by the predetermined actuation volume.

In at least one example embodiment, the pressure change within the enclosed volume corresponds with the actuation.

In at least one example embodiment, the enclosed volume is a compartment of a refrigerator.

In at least one example embodiment, the enclosed volume is an interior of a climate controlled container.

In at least one example embodiment, the actuator is a piston actuator.

In at least one example embodiment, the actuator is a pressure transducer.

In at least one example embodiment, the pressure transducer is a speaker.

In at least one example embodiment, the sensor is a pressure sensor.

In at least one example embodiment, the sensor is an air pressure sensor.

In at least one example embodiment, the sensor is a microphone.

In at least one example embodiment, the enclosed volume is a region of space that is physically bounded by an enclosure that separates the enclosed volume from a volume that is external to the enclosed volume.

In at least one example embodiment, the enclosure substantially impedes influence of pressure from the volume that is external to the enclosed volume.

In at least one example embodiment, substantially impedes influence of pressure from the volume that is external to the enclosed volume refers to circumstances where influence of pressure from the volume that is external to the enclosed volume fails to exceed a leakage tolerance.

In at least one example embodiment, the predetermined actuation volume is an amount of volume displaced by actuation of the actuator.

In at least one example embodiment, the determination of volumetric capacity of the enclosed volume is performed absent regard for temperature.

One or more example embodiments further perform determination of the pressure change magnitude based, at least in part, on the sensor information.

One or more example embodiments further perform sending of the volumetric capacity to a separate apparatus.

One or more example embodiments further perform causation of display of the volumetric capacity.

One or more example embodiments further perform determination that the enclosed volume has been opened, and capturing of an image of at least part of the enclosed volume based, at least in part, on the determination the enclosed volume has been opened.

One or more example embodiments further perform sending of the image to a separate apparatus.

One or more example embodiments further perform causation of display of the image.

In at least one example embodiment, the actuation is a periodic actuation, the enclosed volume is an enclosed container, the sensor is a pressure sensor, the sensor information is periodic pressure sensor information that indicates a pressure change within the enclosed container that corresponds with the periodic actuation, the periodic pressure sensor information indicating the periodic change in pressure having a pressure change magnitude, the predetermined pressure change magnitude is indicative of the reference volumetric capacity of the enclosed container, the reference volumetric capacity is indicative of a predetermined amount of volume of the enclosed container that is absent a predetermined volume of one or more contained objects, and the volumetric capacity is indicative of an amount of volume of the enclosed container that is absent a volume of one or more contained objects.

## BRIEF DESCRIPTION OF THE DRAWINGS

For a more complete understanding of embodiments of the subject matter, reference is now made to the following descriptions taken in connection with the accompanying drawings in which:

FIG. 1 is a block diagram showing an apparatus according to at least one example embodiment;

FIG. 2 is a block diagram illustrating apparatus communication according to at least one example embodiment;

FIGS. 3A-3B are diagrams illustrating an enclosed volume according to at least one example embodiment;

FIGS. 4A-4D are diagrams illustrating determination of a volumetric capacity of an enclosed volume according to at least one example embodiment;

FIGS. 5A-5C are diagrams illustrating sensor information according to at least one example embodiment;

FIGS. 6A-6D are diagrams illustrating display of information including volumetric capacity according to at least one example embodiment;

FIG. 7 is a flow diagram illustrating activities associated with determination of volumetric capacity according to at least one example embodiment;

FIG. 8 is a flow diagram illustrating activities associated with determination of volumetric capacity according to at least one example embodiment;

FIG. 9 is a flow diagram illustrating activities associated with filtering of sensor information according to at least one example embodiment;

FIG. 10 is a flow diagram illustrating activities associated with sending volumetric capacity to a separate apparatus according to at least one example embodiment;

FIG. 11 is a flow diagram illustrating activities associated with capturing an image of at least part of an enclosed volume according to at least one example embodiment; and

FIG. 12 is a flow diagram illustrating activities associated with sending an image to a separate apparatus according to at least one example embodiment.

## DETAILED DESCRIPTION OF THE DRAWINGS

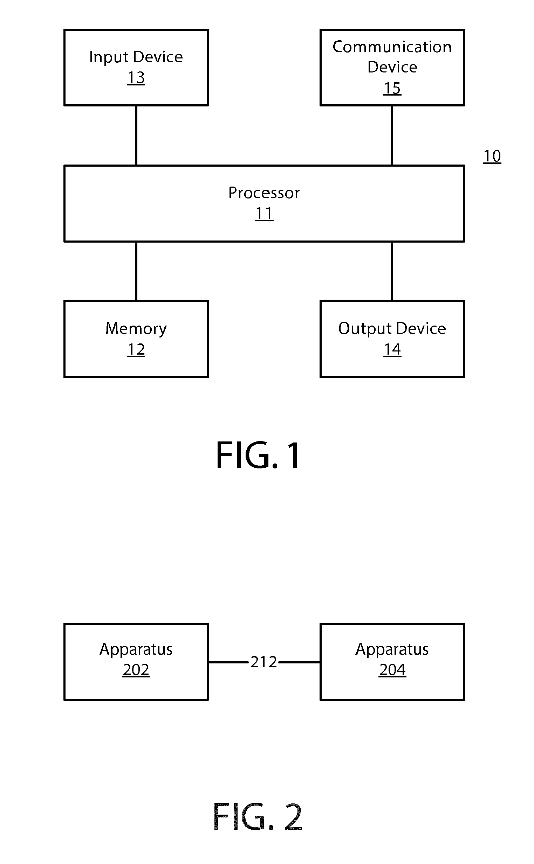

The subject matter described herein and some of its potential advantages are understood by referring to FIGS. 1 through 12 of the drawings.

Some example embodiments will now be described hereinafter with reference to the accompanying drawings, in which some, but not all, embodiments are shown. Various example embodiments of the subject matter may be embodied in many different forms and should not be construed as limited to the embodiments set forth herein; rather, these embodiments are provided so that this disclosure will satisfy applicable legal requirements. Like reference numerals refer to like elements throughout. As used herein, the terms "data," "content," "information," and similar terms may be used interchangeably to refer to data capable of being transmitted, received and/or stored in accordance with embodiments of the present subject matter. Thus, use of any such terms should not be taken to limit the spirit and scope of embodiments of the present subject matter.

Additionally, as used herein, the term 'circuitry' refers to (a) hardware-only circuit implementations (e.g., implementations in analog circuitry, digital circuitry, and/or a combination of analog and digital circuitry); (b) combinations of circuits and computer program product(s) comprising software and/or firmware instructions stored on one or more computer readable memories that work together to cause an apparatus to perform one or more functions described herein; and (c) circuits, such as, for example, a microprocessor(s) or a portion of a microprocessor(s), that require software or firmware for operation even if the software or firmware is not physically present. This definition of 'circuitry' applies to all uses of this term herein, including in any claims. As a further example, as used herein, the term 'circuitry' also includes an implementation comprising one or more processors and/or portion(s) thereof and accompanying software and/or firmware. As another example, the term 'circuitry' as used herein also includes, for example, a baseband integrated circuit or applications processor integrated circuit for a mobile phone or a similar integrated circuit in a server, a cellular network apparatus, other network apparatus, and/or other computing apparatus.

As defined herein, a "non-transitory computer-readable medium," which refers to a physical medium (e.g., volatile or non-volatile memory device), can be differentiated from a "transitory computer-readable medium," which refers to an electromagnetic signal.

FIG. 1 is a block diagram showing an apparatus, such as an electronic apparatus 10, according to at least one example embodiment. It should be understood, however, that an electronic apparatus as illustrated and hereinafter described is merely illustrative of an electronic apparatus that could benefit from embodiments of the subject matter and, therefore, should not be taken to limit the scope of the subject matter. While electronic apparatus 10 is illustrated and will be hereinafter described for purposes of example, other types of electronic apparatuses may readily employ embodiments of the subject matter. Electronic apparatus 10 may be a personal digital assistant (PDAs), a pager, a mobile computer, a desktop computer, a television, a gaming apparatus, a laptop computer, a tablet computer, a media player, a camera, a video recorder, a mobile phone, a global positioning system (GPS) apparatus, an automobile, a kiosk, an electronic table, a refrigerator, a freezer, an appliance, a climate control system, a climate controlled container, and/or any other types of electronic systems. Moreover, the apparatus of at least one example embodiment need not be the entire electronic apparatus, but may be a component or group of components of the electronic apparatus in other example embodiments. For example, the apparatus may be an integrated circuit, a set of integrated circuits, and/or the like.

Furthermore, apparatuses may readily employ embodiments of the subject matter regardless of their intent to provide mobility. In this regard, even though embodiments of the subject matter may be described in conjunction with mobile applications, it should be understood that embodiments of the subject matter may be utilized in conjunction with a variety of other applications, both in the mobile communications industries and outside of the mobile communications industries. For example, the apparatus may be, at least part of, a non-carryable apparatus, such as a large screen television, an electronic table, a kiosk, an automobile, and/or the like.

In at least one example embodiment, electronic apparatus 10 comprises at least one processor 11 and memory 12. Processor 11 may be any type of processor, controller, embedded controller, processor core, and/or the like. In at least one example embodiment, processor 11 utilizes computer program code to cause an apparatus to perform one or more actions. Memory 12 may comprise volatile memory, such as volatile Random Access Memory (RAM) including a cache area for the temporary storage of data and/or other memory, for example, non-volatile memory, which may be embedded and/or may be removable. The non-volatile memory may comprise an EEPROM, flash memory and/or the like. Memory 12 may store any of a number of pieces of information, and data. The information and data may be used by the electronic apparatus 10 to implement one or more functions of the electronic apparatus 10, such as the functions described herein. In at least one example embodiment, memory 12 includes computer program code such that the memory and the computer program code are configured to, working with the processor, cause the apparatus to perform one or more actions described herein.

The electronic apparatus 10 may further comprise a communication device 15. In at least one example embodiment, communication device 15 comprises an antenna, (or multiple antennae), a wired connector, and/or the like in operable communication with a transmitter and/or a receiver. In at least one example embodiment, processor 11 provides signals to a transmitter and/or receives signals from a receiver. The signals may comprise signaling information in accordance with a communications interface standard, user speech, received data, user generated data, and/or the like. Communication device 15 may operate with one or more air interface standards, communication protocols, modulation types, and access types (e.g., one or more standards in the Institute of Electrical and Electronics Engineers (IEEE) 802 family of wired and wireless standards). By way of illustration, the electronic communication device 15 may operate in accordance with second-generation (2G) wireless communication protocols IS-136 (time division multiple access (TDMA)), Global System for Mobile communications (GSM), and IS-95 (code division multiple access (CDMA)), with third-generation (3G) wireless communication protocols, such as Universal Mobile Telecommunications System (UMTS), CDMA2000, wideband CDMA (WCDMA) and time division-synchronous CDMA (TD-SCDMA), and/or with fourth-generation (4G) wireless communication protocols, wireless networking protocols, such as 802.11, short-range wireless protocols, such as Bluetooth, and/or the like. Communication device 15 may operate in accordance with wireline protocols, such as Ethernet, digital subscriber line (DSL), asynchronous transfer mode (ATM), and/or the like.

Processor 11 may comprise means, such as circuitry, for implementing audio, video, communication, navigation, logic functions, and/or the like, as well as for implementing embodiments of the subject matter including, for example, one or more of the functions described herein. For example, processor 11 may comprise means, such as a digital signal processor device, a microprocessor device, various analog to digital converters, digital to analog converters, processing circuitry and other support circuits, for performing various functions including, for example, one or more of the functions described herein. The apparatus may perform control and signal processing functions of the electronic apparatus 10 among these devices according to their respective capabilities. The processor 11 thus may comprise the functionality to encode and interleave message and data prior to modulation and transmission. The processor 1 may additionally comprise an internal voice coder, and may comprise an internal data modem. Further, the processor 11 may comprise functionality to operate one or more software programs, which may be stored in memory and which may, among other things, cause the processor 11 to implement at least one embodiment including, for example, one or more of the functions described herein. For example, the processor 11 may operate a connectivity program, such as a conventional internet browser. The connectivity program may allow the electronic apparatus 10 to transmit and receive internet content, such as location-based content and/or other web page content, according to a Transmission Control Protocol (TCP), Internet Protocol (IP), User Datagram Protocol (UDP), Internet Message Access Protocol (IMAP), Post Office Protocol (POP), Simple Mail Transfer Protocol (SMTP), Wireless Application Protocol (WAP), Hypertext Transfer Protocol (HTTP), and/or the like, for example.

The electronic apparatus 10 may comprise a user interface for providing output and/or receiving input. The electronic apparatus 10 may comprise an output device 14. Output device 14 may comprise an audio output device, such as a ringer, an earphone, a speaker, and/or the like. Output device 14 may comprise a tactile output device, such as a vibration transducer, an electronically deformable surface, an electronically deformable structure, and/or the like. Output device 14 may comprise a visual output device, such as a display, a light, and/or the like. In at least one example embodiment, the apparatus causes display of information, the causation of display may comprise displaying the information on a display comprised by the apparatus, sending the information to a separate apparatus, and/or the like. For example, the apparatus may send the information to a separate display, to a computer, to a laptop, to a mobile apparatus, and/or the like. For example, the apparatus may be a server that causes display of the information by way of sending the information to a client apparatus that displays the information. In this manner, causation of display of the information may comprise sending one or more messages to the separate apparatus that comprise the information, streaming the information to the separate apparatus, and/or the like. The electronic apparatus may comprise an input device 13. Input device 13 may comprise a light sensor, a proximity sensor, a microphone, a touch sensor, a force sensor, a button, a keypad, a motion sensor, a magnetic field sensor, a camera, any combination of these or other like sensors, and/or the like. A touch sensor and a display may be characterized as a touch display. In an embodiment comprising a touch display, the touch display may be configured to receive input from a single point of contact, multiple points of contact, and/or the like. In such an embodiment, the touch display and/or the processor may determine input based, at least in part, on position, motion, speed, contact area, and/or the like. In at least one example embodiment, the apparatus receives an indication of an input. The apparatus may receive the indication from a sensor, a driver, a separate apparatus, and/or the like. The information indicative of the input may comprise information that conveys information indicative of the input, indicative of an aspect of the input indicative of occurrence of the input, and/or the like.

The electronic apparatus 10 may include any of a variety of touch displays including those that are configured to enable touch recognition by any of resistive, capacitive, infrared, strain gauge, surface wave, optical imaging, dispersive signal technology, acoustic pulse recognition, or other techniques, and to then provide signals indicative of the location and other parameters associated with the touch. Additionally, the touch display may be configured to receive an indication of an input in the form of a touch event which may be defined as an actual physical contact between a selection object (e.g., a finger, stylus, pen, pencil, or other pointing device) and the touch display. Alternatively, a touch event may be defined as bringing the selection object in proximity to the touch display, hovering over a displayed object or approaching an object within a predefined distance, even though physical contact is not made with the touch display. As such, a touch input may comprise any input that is detected by a touch display including touch events that involve actual physical contact and touch events that do not involve physical contact but that are otherwise detected by the touch display, such as a result of the proximity of the selection object to the touch display. A touch display may be capable of receiving information associated with force applied to the touch screen in relation to the touch input. For example, the touch screen may differentiate between a heavy press touch input and a light press touch input. In at least one example embodiment, a display may display two-dimensional information, three-dimensional information and/or the like.

In embodiments including a keypad, the keypad may comprise numeric (for example, 0-9) keys, symbol keys (for example, #, *), alphabetic keys, and/or the like for operating the electronic apparatus 10. For example, the keypad may comprise a conventional QWERTY keypad arrangement. The keypad may also comprise various soft keys with associated functions. In addition, or alternatively, the electronic apparatus 10 may comprise an interface device such as a joystick or other user input interface.

Input device 13 may comprise one or more media capturing element. The media capturing element may be any means for capturing an image, video, and/or audio for storage, display, or transmission. For example, in at least one example embodiment in which the media capturing element is a camera module, the camera module may comprise a digital camera which may form a digital image file from a captured image. As such, the camera module may comprise hardware, such as a lens or other optical component(s), and/or software for creating a digital image file from a captured image. Alternatively, the camera module may comprise only the hardware for viewing an image, while a memory device of the electronic apparatus 10 stores instructions for execution by the processor 11 in the form of software for creating a digital image file from a captured image. In at least one example embodiment, the camera module may further comprise a processing element such as a processor separated from the processor 11 in processing image data. The camera module may or may not include an encoder and/or decoder for compressing and/or decompressing image data. The image data may be captured and/or stored in any format, raw or compressed. For example, the encoder and/or decoder may encode and/or decode the image data according to a standard format, for example, a Joint Photographic Experts Group (JPEG) standard format.

FIG. 2 is a block diagram illustrating apparatus communication according to at least one example embodiment. The example of FIG. 2 is merely an example and does not limit the scope of the claims. For example, apparatus count may vary, apparatus configuration may vary, communication channels may vary, and/or the like.

In many circumstances, a user may desire to communicate by way of an electronic apparatus. For example, the users may desire to send and/or receive messages, interact with other apparatuses, send and/or receive information, and/or the like. In order to facilitate such an experience, in many circumstances, it may be desirable to allow for communication between two or more apparatuses. For example, it may be desirable to allow for communication between an apparatus and a separate apparatus. In such an example, each of the apparatus and the separate apparatus may be a phone, a tablet, a computer, a laptop, an electronic apparatus, a server, a wearable apparatus, a head mounted apparatus, a projector, a near eye display, a refrigerator, an appliance, a climate control system, a climate controlled container, and/or the like. In at least one example embodiment, an apparatus and a separate apparatus communicate via a direct communication channel, an indirect communication channel, and/or the like. In such an example embodiment, the indirect communication channel may route communication between the apparatus and the separate apparatus by way of one or more routers, switches, hubs, distribution servers, networks, and/or the like. In at least one example embodiment, an apparatus and a separate apparatus communicate via an indirect communication channel by way of a server. In such an example embodiment, the server may be a computer, a service platform, a repository, an application, and/or the like. For example, the server, may be configured to update an account associated with the separate apparatus such that the separate apparatus may receive information from the apparatus by way of accessing the account via the server.

In the example of FIG. 2, apparatus 202 communicates with apparatus 204 by way of communication channel 212. For example, apparatus 202 may send information to apparatus 204 by way of communication channel 212, apparatus 202 may receive information sent from apparatus 204 by way of communication channel 212, and/or the like. It should be understood that, even though the example of FIG. 2 illustrates a direct communication channel between apparatus 202 and apparatus 204, there may be intermediate apparatuses that facilitate communication between apparatus 202 and apparatus 204. For example, there may be one or more routers, hubs, switches, gateways, base stations, networks, and/or the like, that are utilized in the communication channels between apparatus 202 and apparatus 204. Communication channel 212 may include any number of wired and/or wireless segments. In addition, there may be one or more separate apparatuses that apparatus 202 and/or apparatus 204 are in communication with. For example, apparatus 202 and/or apparatus 204 may be in communication with another apparatus, a separate apparatus, a different apparatus, and/or the like.

In many circumstances, during communication with an apparatus and a separate apparatus, it may be desirable for the apparatuses to share information. For example, information shared between the apparatuses may help facilitate the communication, may provide useful information to the users of the apparatuses, and/or the like. Information shared between the apparatus and the separate apparatus may include information about the apparatus, information about the separate apparatus, information about the user of the apparatus, information about the user of the separate apparatus, and/or the like. For example, the apparatus and the separate apparatus may share information with respect to the location of the separate apparatus, a current operating condition of the separate apparatus, and/or the like. In at least one example embodiment, the information shared between the apparatus and the separate apparatus comprises one or more images. For example, the apparatus and the separate apparatus may share an image of at least part of an enclosed volume that was captured by the apparatus and/or the separate apparatus similar as described regarding FIG. 1.

In some circumstances, a plurality of apparatuses may share information by way of local communication among the apparatuses. For example, the apparatuses may share information by way of low power radio frequency communication (e.g., Bluetooth® Low Energy in Bluetooth® 4.0 or later), a radio frequency communication, near field communication, inductive communication, electric field communication, Bluetooth communication, infrared communication, local area network communication, wireless local area network communication, local port communication, input/output port communication, and/or the like. In some circumstances, apparatuses may share information by way of non-local communication among the apparatuses. For example, the apparatuses may communicate by way of high power radio frequency communication, wide area network communication, internet communication, cellular network communication, and/or the like. In at least one example embodiment, an apparatus retains information associated with communication with a separate apparatus. For example, the apparatus may comprise information associated with identifying, communicating with, authenticating, performing authentication with, and/or the like, the separate apparatus. In this manner, the apparatus may be privileged to perform operations in conjunction with the separate apparatus that a different apparatus may lack the privilege to perform.

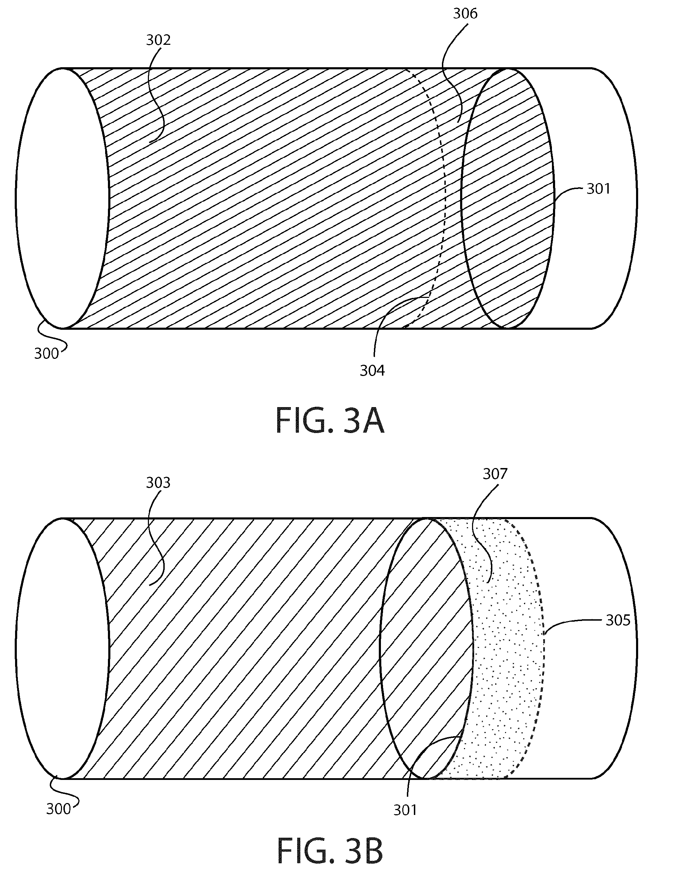

FIGS. 3A-3B are diagrams illustrating an enclosed volume according to at least one example embodiment. The examples of FIGS. 3A-3B are merely examples and do not limit the scope of the claims. For example, the shape of the enclosed volume may vary, the size of the enclosed volume may vary, the configuration of the enclosed volume may vary, and/or the like.

In some circumstances, an apparatus may comprise a volume, utilize a volume, and/or the like. For example, an empty container may comprise a volume of empty space. Volume may refer to an amount of space, an object occupying an amount of space, an amount of a substance, and/or the like. For example, an empty space within a container, a filled space within a container, a measured amount of a substance, a container, and/or the like may be referred to as a volume. In some circumstances, a volume may become enclosed. For example, in circumstances where a volume of air is completely or substantially enveloped by an enclosure, the volume of air enveloped by the enclosure may be described as an enclosed volume of air. In at least one example embodiment, an enclosed volume is a region of space that is physically bounded by an enclosure that separates the enclosed volume from a volume that is external to the enclosed volume. In another example, an open container may be sealed with a cover. For example, a jar may be sealed with a lid. In circumstances such as these, the container may be described as an enclosed volume, an enclosed container, and/or the like. In at least one example embodiment, an enclosed volume is an enclosed container.

In some circumstances, an enclosed volume may substantially impede influence of pressure from the volume that is external to the enclosed volume. Substantially impeding influence of pressure from the volume that is external to the enclosed volume may refer to circumstances where influence of pressure from the volume that is external to the enclosed volume fails to exceed a leakage tolerance. A leakage tolerance may refer to an allowable amount of ingress and/or egress of a substance within and enclosed volume. For example, an enclosed volume may have a leakage tolerance of air, liquid, and/or the like. For example, in circumstances where the volume is an airtight container, an increase in air pressure outside the container may have a miniscule effect on the pressure inside the container, a nominal effect on the pressure inside the container, and/or the like in circumstances where the airtight container has a low leakage tolerance.

In some circumstances, an enclosed volume may have a volumetric capacity. Volumetric capacity may refer to the amount of a substance that may occupy a volume. For example, an enclosed container, such as a sealed jar, may have a volumetric capacity of 1 liter of liquid. In some circumstances, the volumetric capacity of a sealed volume may change. For example, a portion of the volumetric capacity of the enclosed volume may become occupied by an amount of a substance, the volumetric capacity of a container may be altered by adjusting the configuration of the container, and/or the like. For example, a sealed 1 liter jar may be temporarily opened and partially filled with a substance. For instance, the jar may be filled with 400 milliliters (mL) of liquid. In such circumstances, when the jar is resealed, the volumetric capacity of the enclosed volume comprised by the jar has been reduced to 600 mL. That is to say, because 400 mL of the 1 liter jar is being occupied by a liquid, the volumetric capacity of the jar would now be 600 mL. In another example, the volumetric capacity of an enclosed volume may be adjustable. For example, the enclosed volume may comprise an adjustable piston, plunger, actuator, and/or the like that may be used to adjust the volumetric capacity of the enclosed volume. For example, in circumstances where the enclosed volume is a syringe, the volumetric capacity of the syringe may be increased or decreased by changing the position of a plunger comprised by the syringe.

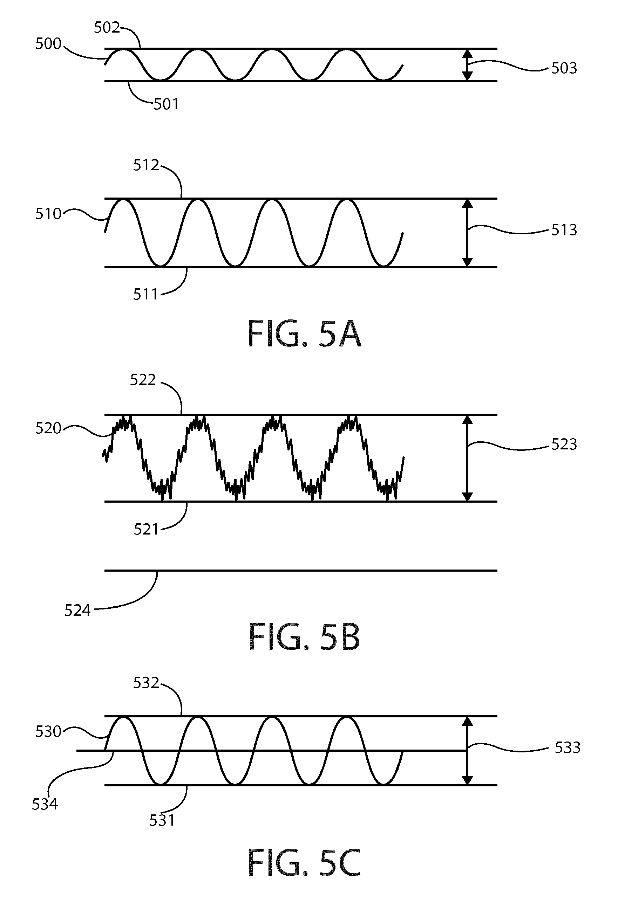

The examples of FIGS. 3A-3B illustrate enclosed volume 300. Even though enclosed volume 300 is illustrated as a transparent hollow cylinder, enclosed volume 300 may be any enclosed volume having any regular or irregular shape. Enclosed volume 300 of FIGS. 3A-3B comprises an enclosure sealed by a moveable plunger 301 in a configuration similar to a syringe. The volumetric capacity of enclosed volume 300 may be adjusted by changing the position of plunger 301. For instance, in the example of FIG. 3A, plunger 301 is located at a position corresponding with position 305 indicated by a dashed line on FIGURE 5B. In the example of FIG. 3A, the position of plunger 301 gives enclosed volume 300 a volumetric capacity illustrated as volumetric capacity 302, depicted as the hatched region of FIG. 3A. In the example of FIG. 3B, plunger 301 is located at a position corresponding with position 304 indicated by a dashed line on FIGURE 3A. In the example of FIG. 3B, the position of plunger 301 gives enclosed volume 300 a volumetric capacity illustrated as volumetric capacity 303, depicted as the hatched region of FIG. 3B. It can be seen that volumetric capacity 303 of FIG. 3B is less than volumetric capacity 302 by an amount approximately equal to the volume illustrated in FIG. 3B as volume 307. Volume 307 is approximately equal to the portion of volumetric capacity 302 labeled as volume 306 between position 304 and plunger 301 in the example of FIGURE 3A. Volume 307 may be described as the difference in volume ($\Delta$V) between volumetric capacity 302 and volumetric capacity 303. It can be seen from these examples how the volumetric capacity of enclosed volume 300 of FIGS. 3A-3B may be adjusted by changing the position of plunger 301. In this manner, enclosed volume 300 may be described as having a variable volumetric capacity.

In some circumstances, it may be desirable to determine the volumetric capacity of an enclosed volume. For example, the enclosed volume may have a variable volumetric capacity, similar to enclosed volume 300 of FIGS. 3A-3B. The volumetric capacity of a particular configuration of an adjustable enclosed volume may be known. For example, the adjustable enclosed volume may have a known maximum volumetric capacity. In such circumstances, it may be possible to determine a different volumetric capacity of the adjustable volume based on a pressure of a volume of gas occupying the enclosed volume. For example, when a volume of gas having a particular mass occupies a volume with particular volumetric capacity at a known pressure, and a volume of gas having an identical particular mass occupies a volume having a different volumetric capacity at a different pressure, the different volumetric capacity may be calculated using Boyle's law when the temperature is constant.

As used herein, the term "constant" with respect to a temperature (e.g., a "constant temperature) refers a range of temperatures within a tolerable threshold, which is based on the usage or application of the subject matter described herein. For example, in calculating or determining volumetric capacity of a refrigerator for use to store household items, a tolerable threshold may be one or two degrees or a fraction of a degree in Celsius (°C) or Fahrenheit (°F). If the tolerable threshold is 0.5 °F, for example, temperature range from 37.5 °F to 38.5 °F is considered a constant temperature of 38 °F, which may also be referred to as a substantially constant temperature.

When temperature and the mass of the volume of gas is held constant, Boyle's law may be expressed as the equation:

$$P_1V_1 = P_2V_2$$

Where $P_1$ is the pressure of a volume of gas having a particular mass occupying a volume $V_1$, and $P_2$ is the pressure of a volume of gas having an identical particular mass occupying a volume $V_2$. For instance, in the example of FIGS. 3A-3B, a volume of gas having a particular mass may be occupying enclosed volume 300 in the example of FIG. 3A, and a volume of gas having an identical particular mass may be occupying enclosed volume 300 the example of FIG. 3B. In circumstances where the volumetric capacity 302 of FIG. 3A is known, and the pressure of the volume of gas is measured, the pressure of the volume of gas may be measured in the example of FIG. 3B to derive the volumetric capacity 303 of enclosed volume 300 in the example of FIG. 3B. For example, in circumstances where the volumetric capacity 302 of the volume of FIG. 3A is 2 liters, a volume of gas having a particular mass is occupying enclosed volume 300 of FIG. 3A with a pressure of 1 atmosphere, and a volume of gas having an identical particular mass is occupying enclosed volume 300 of FIG. 3B with a pressure of 2 atmospheres, it can be calculated that the volumetric capacity 303 of enclosed volume 300 of FIG. 3B is 1 liter, as shown:

$$2 \text{ liters} * 1 \text{ atmosphere} = 2 \text{ atmospheres} * V_2$$

$$V_2 = 1 \text{ liter}$$

Where $V_2$ is the volumetric capacity 303 of enclosed volume 300 of FIG. 3B. In this example, the difference in volumetric capacity ($\Delta V$) 307 between volumetric capacity 302 and volumetric capacity 303 is 1 liter, as shown:

$$\Delta V = 2 \text{ liters} - 1 \text{ liter} = 1 \text{ liter}$$

Therefore in circumstances where volumetric capacity 302 has a volume $V_1$, and volumetric capacity 303 has a volume = V, It can be seen that volumetric capacity 302 = $V_2 + \Delta V$. Therefore in circumstances where the temperature and the mass of the volume of gas are constant, according to Boyle's law:

$$P_1 V_1 = P_2 V_2, \text{ where } V_1 = V_2 + \Delta V$$

$$P_1 (V_2 + \Delta V) = P_2 V_2$$

$$P_1 V_2 + P_1 \Delta V = P_2 V_2$$

$$P_2 V_2 - P_1 V_2 = P_1 \Delta V$$

$$V_2 (P_2 - P_1) = P_1 \Delta V$$

$$V_2 = \frac{P_1 \Delta V}{P_2 - P_1}$$

In this manner, the volumetric capacity of the enclosed volume of FIGS. 3A-3B may be calculated based on an initial pressure, a different pressure, and a known change in volumetric capacity. A difference between an initial pressure and a different pressure may be referred to as a pressure change. The size of a difference between an initial pressure and a different pressure may be referred to as a pressure change magnitude. For example, when an initial pressure $P_1 = 1$ atmosphere, a different pressure $P_2 = 1.5$ atmospheres, and a change of volumetric capacity is 1 liter, it can be seen that the Volumetric capacity V = 2 liters as shown:

$$V = \frac{1 \text{ atmosspheres} * 1 \text{ liter}}{1.5 \text{ atmospheres} - 1 \text{ atmosphere}} = 2 \text{ liters}$$

In this example, the pressure change magnitude is 0.5 atmospheres. In at least one example embodiment, a pressure change comprises a pressure change magnitude. It can be seen in this example that the volumetric capacity may be calculated without a temperature value. In at least one example embodiment, determination of volumetric capacity of the enclosed volume is performed absent regard for temperature.

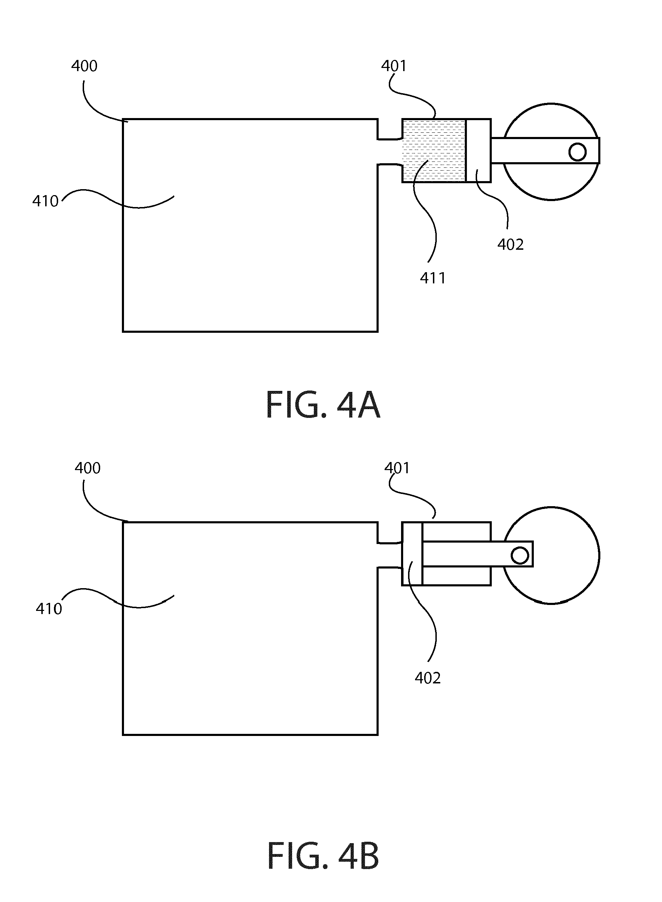

FIGS. 4A-4D are diagrams illustrating determination of a volumetric capacity of an enclosed volume according to at least one example embodiment. The examples of FIGS. 4A-4D are merely examples and do not limit the scope of the claims. For example, the size of the enclosed volume may vary, the shape of the enclosed volume may vary, the determination of the volumetric capacity may vary, and/or the like.

As previously described, an enclosed volume may have a variable volumetric capacity, similar as described regarding FIGS. 3A-3B. In some circumstances, it may be desirable to control the volume of an enclosed volume having a variable volumetric capacity. For example, it may be desirable to increase and/or decrease the volumetric capacity of the enclosed volume to cause a pressure change within the enclosed volume. In this manner, the volumetric capacity of the enclosed volume may be determined similar as described regarding FIGS. 3A-3B. In some circumstances, the volume of an enclosed volume may be controlled by causing actuation of an actuator. An actuator may include a mechanical device, an electromechanical device, and/or the like for moving and/or controlling something. For example, an actuator may be a device for controlling the volumetric capacity of an enclosed volume. For instance, an actuator may comprise a piston, a pressure transducer, and/or the like. Causing actuation of an actuator may refer to causing an actuator to move. For example, in circumstances where the actuator comprises a piston, causing actuation of the actuator may cause the piston to move. In another example, in circumstances where the actuator is a pressure transducer, causing actuation of the pressure transducer may cause the pressure transducer to vibrate, deflect, compress, decompress, and/or the like. In at least one example embodiment, an apparatus causes actuation of an actuator. In at least one example embodiment, the actuator is a piston actuator. A piston actuator may refer to an actuator comprising a piston. In at least one example embodiment, the actuator is a pressure transducer. In at least on example embodiment, the pressure transducer is a speaker or similar to a speaker. A speaker may refer to a loudspeaker, a portion of a speaker (e.g., a bass or low-pass driver of a speaker), an electroacoustic transducer, a transducer which generates movements to produce a sound wave or pressure wave based, at least in part, on an electrical signal, and/or the like.

In some circumstances, an actuator may have a predetermined actuation volume. A predetermined actuation volume may refer to an amount of volume displaced by actuation of the actuator. For example, an actuator comprising a piston, a speaker, and/or the like may move, displace, and/or compress a volume of gas (e.g., air) having a particular mass. For example, an actuator comprising a piston, a speaker, and/or the like may move the piston, the speaker or a component of the speaker (e.g., the cone of the speaker), and/or the like between a minimum and a maximum travel position. Travel position may refer to a position within a range of travel of an apparatus and/or a component of an apparatus during typical operation. For example, a piston may have a minimum travel position, a maximum travel position, and intermediate travel positions between the minimum and maximum travel position when a stroke of the piston is performed within a cylinder. When a piston, a speaker, and/or the like is moved from the minimum to the maximum travel position, or from the maximum to the minimum travel position, the piston, the speaker, and/or the like may displace a particular fixed volume. In some circumstances, a predetermined actuation volume may be varied. For example, a piston may be moved by a particular amount to displace a calibrated volume. In another example, a speaker may be vibrated at a particular frequency to displace a particular volume. For instance, a speaker may displace more volume when vibrated at a lower frequency than it displaces when vibrated at a higher frequency. In at least one example embodiment, an apparatus causes actuation of an actuator by a predetermined actuation volume.

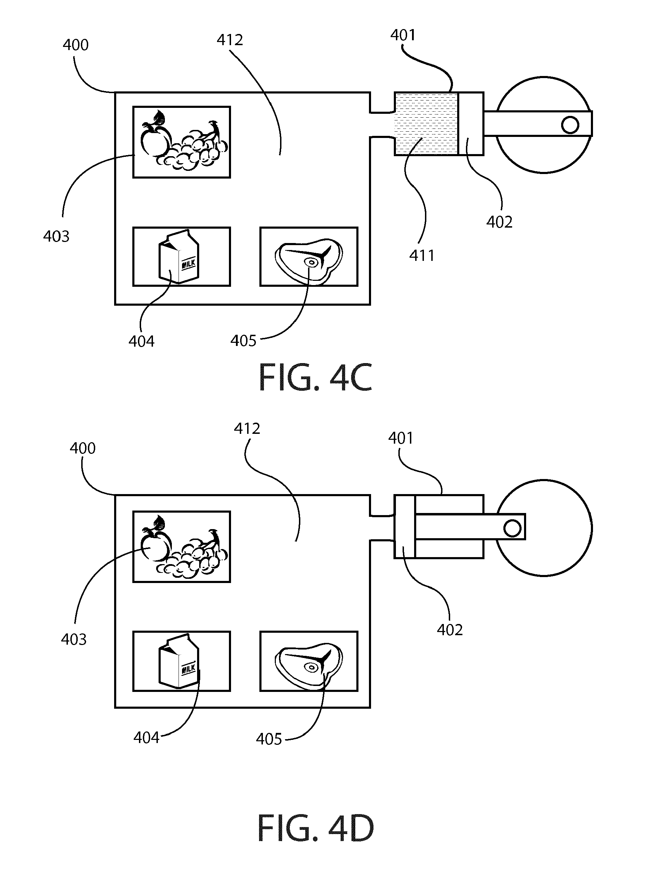

The example of FIGS. 4A-4D illustrates enclosed volume 400, and actuator 401 comprising piston 402 within enclosed volume 400. Enclosed volume 400 has a variable volumetric capacity. The volumetric capacity of enclosed volume 400 may be adjusted by causing actuation of actuator 401. In the example of FIGS. 4A-4D causing actuation of actuator 401 causes movement of piston 402. In the example of FIGS. 4A-4D, the volumetric capacity of enclosed volume 400 increases when piston 402 is moved further right. In at least one embodiment, movement right is caused by actuating actuator 401. In the example of FIGS. 4A-4D, the volumetric capacity of enclosed volume 400 decreases when piston 402 moved is further left. In at least one embodiment, movement left is caused by actuating actuator 401. In the example of FIGS. 4A-4D, actuator 401 has a predetermined actuation volume that equals a volumetric capacity 411, indicated by the dashed regions in FIGS. 4A and 4C.

In the example of FIGURE 4A, enclosed volume 400 is configured such that piston 402 is at a compression stroke minimum travel position. In the example of FIGURE 4A, enclosed volume has a volumetric capacity equivalent to the sum of volumetric capacity 410 and volumetric capacity 411. In the example of FIGURE 4B, enclosed volume 400 is configured such that piston 402 is at a maximum compression stroke travel position. In the example of FIGURE 4B, enclosed volume 400 has a volumetric capacity 410. In the examples of FIGS. 4A-4B, it should be understood that volumetric capacity 410 comprises the volumetric capacity of the unhatched portion of enclosed volume 400 bounded by volumetric capacity 411 in FIG. 4A, including the channel/connecting portion leading to actuator 401.

In some circumstances, it may be desirable to determine a pressure change within an enclosed volume. For example, as previously described, it is possible to determine a volumetric capacity of an enclosed volume similar as described regarding FIGS. 3A-3B when a pressure change is known. In circumstances such as these, it may be beneficial to determine a pressure change from a pressure at a first volumetric capacity, and a pressure at a second volumetric capacity of the enclosed volume. In some circumstances, a pressure change within an enclosed volume may be determined by way of a sensor. For example, an apparatus may receive sensor information from a sensor configured to measure a pressure and/or a pressure change within an enclosed volume. Sensor information may refer to information transmitted by a sensor that indicates a measurement, a sensor reading, a value, and/or the like. For example, sensor information may indicate a pressure, a pressure change, a voltage, a current, and/or the like. The sensor information may include digital data such as a binary number analog data such as a voltage level, and/or the like. In at least one example embodiment, sensor information indicates a pressure change. For example, the sensor information may indicate a pressure change within an enclosed volume. In at least on example embodiment, an apparatus receives sensor information from a sensor. In such an example embodiment, the apparatus may determine a pressure change magnitude based, at least in part, on the sensor information.

In some circumstances, a sensor may be a pressure sensor. For example, a sensor that transmits pressure sensor information may be referred to as a pressure sensor. A pressure sensor may be microphonic, piezoresistive, capacitive, electromagnetic, piezoelectric, optical, and/or the like. Pressure sensor information may refer to information from a sensor (e.g., a pressure sensor) that can be used to indicate pressure. In at least one example embodiment, a sensor is a pressure sensor. In at least one example embodiment, pressure sensor information indicates a change in pressure that has a pressure change magnitude. In some circumstances, a sensor may be an air pressure sensor. For example, a pressure sensor that measures atmospheric pressure, a pressure of air within an enclosed volume, and/or the like may be referred to as an air pressure sensor. In at least one example embodiment, a sensor is an air pressure sensor. In some circumstances, a pressure sensor may detect, measure, capture, and/or the like a sound pressure, such as a sound wave, an acoustic vibration, and/or the like. A pressure sensor that detects, measures, captures, and/or the like a sound pressure may be referred to as a microphone. In at least one example embodiment, a sensor may include a microphone.

In some circumstances, it may be desirable to cause a pressure change within an enclosed volume. For example, as previously described, it may be desirable to determine the volumetric capacity of the enclosed volume. In circumstances such as these, the volumetric capacity may be determined based, at least in part, on a caused pressure change. In some circumstances, a pressure change may be caused by actuation of an actuator. For example, it is known from Boyle's law that in the example of FIGS. 4A-4D, in circumstances where enclosed volume 400 contains volume of gas having a particular mass held at a constant temperature, the pressure within enclosed volume 400 will increase when the volumetric capacity of enclosed volume 400 is decreased by piston 402 moving further left by causing actuation of actuator 401. In similar circumstances, the pressure within enclosed volume 400 will decrease when the volumetric capacity of enclosed volume is 400 increased by piston 402 moving further right by causing actuation of actuator 401. In at least one example embodiment, an apparatus receives, from a sensor, sensor information that indicates a pressure change within an enclosed volume in response to an actuation of one or more actuators. For example, there may be a plurality of actuators. In such an example, actuators may be positioned at various locations with respect to the enclosed volume.

For example, a pressure change may be caused within enclosed volume 400 of FIGS. 4A-4B by causing actuation of actuator 401 such that the actuation of actuator 401 causes a change in volume of enclosed volume 400 by a predetermined actuation volume. The pressure change may be indicated by a sensor configured to measure a pressure change within enclosed volume 400. The pressure change within enclosed volume 400 may, for example, correspond with the actuation of actuator 401. For instance, as described regarding FIGS. 3A-3B, it is understood that an unknown volume may be determined from a pressure change magnitude within an enclosed volume having a variable volumetric capacity when the change in volumetric capacity ($\Delta V$) is known. For example, in circumstances where the volumetric capacity ($V_2$) of enclosed volume 400 is equal to the sum of volumetric capacity 410 and volumetric capacity 411, as illustrated in FIG. 4A, with a pressure of 1 atmosphere ($P_1$), the volumetric capacity of volume 400 is equal to volumetric capacity 410 as illustrated in FIG. 4B with a pressure of 1.1 atmospheres ($P_2$), and volumetric capacity 411 is known to be 1 liter, the change in volumetric capacity ($\Delta V$) is 1 liter, the pressure change magnitude is 0.1 atmospheres, and the volumetric capacity of enclosed volume 400 may be calculated. For instance, in this example, the volumetric capacity of enclosed volume 400 is calculated to be 10 liters, as shown:

$$V_2 = \frac{P_1 \Delta V}{P_2 - P_1}$$

$$V_2 = \frac{1 \text{ atmosspheres} * 1 \text{ liter}}{1.1 \text{ atmospheres} - 1 \text{ atmosphere}} = 10 \text{ liters}$$

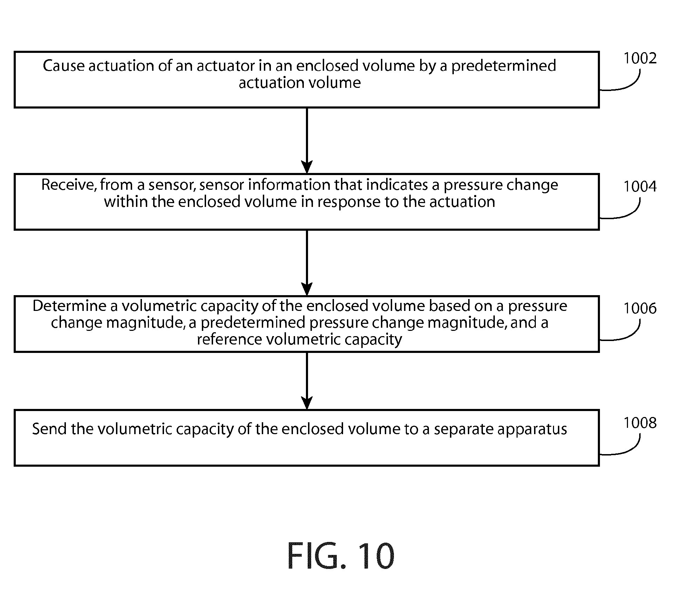

In this example, the volumetric capacity of enclosed volume 400 is equal to 11 liters in FIG. 4A, and 10 liters in FIG. 4B, with an example volumetric capacity 411 over volumetric capacity 410 ratio of about 1/10. In other examples, actuator 401 may have a much smaller volumetric capacity, giving a ratio of 1/100, 1/1000, or 1/N, where N can be any number.

As previously described, an enclosed volume, such as a refrigerator, a freezer, a container, and/or the like may have a volumetric capacity. In some circumstances, the volumetric capacity of the enclosed volume may have a known value. A known volumetric capacity may be referred to as a reference volumetric capacity. For example, in circumstances where the enclosed volume is an empty refrigerator, the volumetric capacity of the empty refrigerator may be a predetermined volumetric capacity, may be a known volumetric capacity, may have been previously measured, and/or the like. The previously measured volumetric capacity of the empty refrigerator may be a reference volumetric capacity for the refrigerator. In such circumstances, the volumetric capacity may subsequently change. For instance, the volumetric capacity of an enclosed volume may be reduced by placing an object within the enclosed volume. An object within contained within an enclosed volume may be referred to as a contained object. For example, in circumstances where the enclosed volume is a refrigerator, the volumetric capacity of the refrigerator may be reduced as the refrigerator is filled with contained objects, such as food items, beverages, and/or the like. For instance, placing food items in the refrigerator may reduce the volumetric capacity of the refrigerator by an amount equal to the volume displaced by the food items. For example, in circumstances where the volumetric capacity of an empty refrigerator is 10 liters, and a 2 liter container of liquid is placed within the refrigerator, the volumetric capacity of the refrigerator will now be 8 liters. In at least one example embodiment, volumetric capacity is indicative of an amount of volume of an enclosed volume that is absent a volume of one or more contained objects. Contained objects may be separate and distinct from the enclosed volume. For example, it can be seen that a food item enclosed within an enclosed volume of a refrigerator is separate and distinct from the refrigerator. In at least one example embodiment, the enclosed volume is a compartment of a refrigerator that may or may not be refrigerated. In at least one example embodiment, the enclosed volume is an interior of a climate controlled container.

In some circumstances, when the volumetric capacity of an enclosed volume has changed, the current volumetric capacity of the enclosed volume may be unknown. For example, in circumstances where the enclosed volume is a refrigerator, a container of liquid of an unknown volume may be placed into the refrigerator, reducing the volumetric capacity of the refrigerator by an unknown amount. In circumstances such as these, it may be desirable to determine the volumetric capacity of the enclosed volume. For example, it may be desirable to determine how much volumetric capacity is available in a refrigerator for storing food items prior to purchase of additional food items that may require refrigeration. In this manner, a user of the refrigerator may limit the purchase of food items to an amount of food items that may be contained within the remaining volumetric capacity of the refrigerator.

In the example of FIGS. 4C-4D, enclosed volume 400 contains contained objects 403, 404, and 405. In the example of FIGS. 4C-4D, in comparison to the volumetric capacity of enclosed volume 400 of FIGS. 4A-4B, respectively, the volumetric capacity of enclosed volume 400 has been reduced from an amount equivalent to the combined volume of contained objects 403, 404, 405. In the example of FIG. 4C, enclosed volume 400 is configured such that piston 402 is at a compression stroke minimum travel position. In the example of FIG. 4C, enclosed volume has a volumetric capacity equivalent to the sum volumetric capacity 412 and volumetric capacity 411. In the example of FIG. 4D, enclosed volume 400 is configured such that piston 402 is at a compression stroke maximum travel position. In the example of FIG. 4D enclosed volume 400 has a volumetric capacity 412. In the examples of FIGS. 4C-4D, it should be understood that volumetric capacity 412 comprises the volumetric capacity of the unhatched portion of enclosed volume 402 bounded by volumetric capacity 411 in FIG. 4C, including the channel leading to actuator 401.

As previously described, the volumetric capacity of an enclosed volume may be determined by causing a change in the volumetric capacity of the enclosed volume such that the change in volumetric capacity causes a change in pressure. For example, a pressure change may be caused within enclosed volume 400 of FIGS. 4C-4D by causing actuation of actuator 401 such that the actuation of actuator 401 causes a change in volume of enclosed volume 400 by a predetermined actuation volume. The pressure change may be indicated by a sensor configured to measure a pressure change within enclosed volume 400. The pressure change within enclosed volume 400 may correspond with the actuation of actuator 401. For instance, as described regarding FIGS. 3A-3B, it is understood that an unknown volume may be determined from a pressure change magnitude within an enclosed volume having a variable volumetric capacity when the change in volumetric capacity (ΔV) is known. For example, in circumstances where the volumetric capacity (V) of enclosed volume 400 is equal to the sum of volumetric capacity 412 and volumetric capacity 411 as illustrated in FIG. 4C with a pressure of 1 atmosphere ($P_1$), the volumetric capacity of volume 400 is equal to volumetric capacity 412 as illustrated in FIG. 4D with a pressure of 1.2 atmospheres ($P_2$), and volumetric capacity 411 is known to be 1 liter, the change in volumetric capacity (ΔV) is 1 liter, the pressure change magnitude is 0.2 atmospheres, and the volumetric capacity of enclosed volume 400 may be calculated. For instance, in this example, the volumetric capacity of enclosed volume 400 will calculate to be 5 liters, as shown:

$$V_2 = \frac{P_1 \Delta V}{P_2 - P_1}$$

$$V_2 = \frac{1 \text{ atmosspheres} * 1 \text{ liter}}{1.2 \text{ atmospheres} - 1 \text{ atmosphere}} = 5 \text{ liters}$$

In this example, the volumetric capacity of enclosed volume 400 is equal to 6 liters in FIG. 4A, and 5 liters in FIG. 4B.

An enclosed volume may have a reference volumetric capacity. A reference volumetric capacity may refer to a volumetric capacity that is indicative of a predetermined amount of volume that is absent a predetermined volume of one or more contained objects. For instance, in circumstances where the enclosed volume is a refrigerator (or a compartment of a refrigerator), the reference volumetric capacity may be the volumetric capacity of the refrigerator (or the compartment of a refrigerator) when it is absent any contained objects, such as food items. The predetermined volume of the contained objects may be based, at least in part, on a static value, a calibration value, and/or the like. A static value may refer to a value that is a fixed value. A calibration value may refer to a value that is determined by a measurement procedure, a calibration procedure, a setup procedure, and/or the like.

Similarly, in some circumstances, a pressure change magnitude may have been predetermined for an enclosed volume. A predetermined pressure change magnitude may be indicative of a reference volumetric capacity of the enclosed volume. For example, in circumstances where the enclosed volume has a variable volumetric capacity, a pressure change magnitude may have been determined by measuring the pressure within the enclosed volume when the volumetric capacity of the enclosed volume is varied from a reference volumetric capacity by a predetermined actuation volume. In circumstances such as these, the volumetric capacity (V) of the enclosed volume may be determined based, at least in part, on a pressure change magnitude (ΔP), the predetermined pressure change magnitude ($\Delta P_{ref}$), and the reference volumetric capacity ($V_{ref}$). For example, volumetric capacity (V) can be calculated based on the following equations:

$$\text{Cap} = \frac{V}{V_{ref}}$$

$$V = \frac{P_1 \Delta V}{\Delta P}$$

$$V_{ref} = \frac{P_{ref1} \Delta V}{\Delta P_{ref}}$$

$$\text{Cap} = \frac{P_1 \Delta P_{ref}}{P_{ref1} \Delta P}$$

Where Cap is a fraction of volumetric capacity $V_{ref}$ when $P_1 = P_{ref1}$, $P_{ref1}$ is the initial pressure used to calculate $\Delta P_{ref}$, and $P_1$ is the initial pressure used to calculate ΔP.

$$V = \text{Cap} * V_{ref}$$

For example, in FIGS. 4A-4B, enclosed volume 400 is absent any contained objects. In the example of FIGS. 4A-4B, volumetric capacity 410 may serve as a reference volumetric capacity. For example, volumetric capacity 410 may have a reference volumetric capacity of 10 liters, and pressure change magnitude of 0.1 atmospheres between the configuration of enclosed volume 400 between FIG. 4A and FIG. 4B. In this example, the pressure change magnitude of 0.1 atmospheres may serve as a predetermined pressure change magnitude. In the example of FIGS. 4C-4D, a pressure change magnitude of 0.2 atmospheres may be indicated. When the reference volumetric capacity of 10 liters and the predetermined pressure change magnitude of 0.1 atmospheres are utilized, the volumetric capacity 412 of FIGS. 4C-4D may be calculated based, at least in part, on the pressure change magnitude of 0.2 atmospheres, the predetermined pressure change magnitude of 0.1 atmospheres, and the reference volumetric capacity of 10 liters, as shown:

$$\mathrm{Cap} = \frac{P_1 \Delta P_{ref}}{P_{ref1} \Delta P}$$

Where Cap is a fraction of volumetric capacity $V_{ref}$ when $P_1 = P_{ref1}$

$$\mathrm{If}\ P_1 = P_{ref1}$$

$$\mathrm{Cap} = \frac{0.1}{0.2} = 0.5$$

$$V = 0.5 * 10\ \mathrm{liters} = 5\ \mathrm{liters}$$

In at least one example embodiment, a volumetric capacity of an enclosed volume is determined based, at least in part, on a pressure change magnitude, a predetermined pressure change magnitude, and a reference volumetric capacity.

In some circumstances, contained objects may compromise the volumetric capacity of an enclosed volume due to their shape. For example, round sided objects placed within the enclosed volume may not be packed as densely as square sided objects. In circumstances, such as these, it may be desirable to adjust the volumetric capacity based on an object inefficiency constant. For example, the volumetric capacity may be adjusted, depending on applications, by a constant of, for example, 10% to 20% reduction or addition to account for object inefficiency (adjustment value), the volumetric capacity may be adjusted by a variable factor that is proportional to the fraction of volumetric capacity remaining, and/or the like. The adjustment value may be reduced or increased. For example, a manufacturer of actuators and sensors for specific applications (e.g., determining volumetric capacity of a refrigerator or compartments thereof) may determine and recommend that an adjustment value for a particular model of refrigerator is -%5,-12%, +10%, etc.

FIGS. 5A-5C are diagrams illustrating sensor information according to at least one example embodiment. The examples of FIGS. 5A-5C are merely examples and do not limit the scope of the claims. For example, the type of sensor may vary, the type of sensor information may vary, the amount of sensor information may vary, and/or the like.

In some circumstances, it may be desirable to take multiple sensor readings over a period of time. For example, sensor information derived from an average result of several sensor readings may provide a more accurate value of the conditions being measured. For instance, an electrical disturbance may make the sensor reading inaccurate, the sensor may take a reading during a brief anomaly of the conditions being measured, and/or the like. Averaging the results of multiple sensor readings may reduce the influence of such effects. Sensor information derived from an average result of several sensor readings taken over a period of time may be referred to as periodic sensor information. In at least one example embodiment, sensor information is periodic sensor information.

As previously described, it may be desirable to determine a volume of an enclosed container based, at least in part, on sensor information. In some circumstances, it may be desirable to determine a volume of an enclosed container based, at least in part, on periodic sensor information. For example, a more accurate volume of an enclosed container may be determined based on periodic sensor information.

As previously described, in some circumstances, a pressure change may be caused within an enclosed volume by actuation of an actuator. In circumstances where it is desirable to receive periodic sensor information related to pressure caused by the actuator, it may be desirable to perform periodic actuation of the actuator. Periodic actuation may refer to an actuation that repeats over a period of time. For example, actuation of an actuator may be performed such that a periodic actuation causes a periodic change in volume of the enclosed volume by a predetermined actuation volume. In circumstances such as these, it may be desirable to periodically measure a maximum pressure and minimum pressure, by way of a sensor, while an actuator is periodically actuated by the predetermined actuation volume. In this manner, the maximum pressure may be averaged, the minimum pressure may be averaged, and/or the like such that the sensor information is more accurate. The difference between the minimum pressure and the maximum pressure from the periodic sensor information may indicate a change in pressure that has a pressure change magnitude. In at least one example embodiment, an actuation of an actuator is a periodic actuation. In some circumstances, the pressure change within an enclosed volume may correspond with the actuation. For instance, in circumstances where an actuator is actuated by a predetermined actuation volume, the pressure within the enclosed volume will rise as the actuation volume decreases, and fall as the actuation volume increases. In circumstances where the actuation is a periodic actuation, the pressure change within the enclosed volume may correspond with the periodic actuation.

In some circumstances, pressure change magnitude may correspond with an amplitude of periodic pressure sensor information. For example, in circumstances where the periodic pressure sensor information is an analog signal, the signal may increase and decrease periodically with the increase and decrease of measured pressure. In at least one example embodiment, pressure change magnitude corresponds with an amplitude of periodic pressure sensor information. In at least on example embodiment, the pressure change magnitude is double the amplitude of the periodic pressure sensor information.

In some example embodiments, actuation of an actuator, measurement by a sensor, and/or the like to determine the volumetric capacity of an enclosed volume may be triggered by an event. For example, if the enclosed volume is temporarily opened, determination of the volumetric capacity of the enclosed volume may be initiated upon reclosing of the enclosed volume. In another example, determination of the volumetric capacity of the enclosed volume may be initiated upon a time based condition, such as a periodic timer, may be initiated upon user request, and/or the like.

The example of FIG. 5A illustrates periodic sensor information 500 and periodic sensor information 510. Periodic sensor information 500 has a trough 501, a crest 502, and a magnitude 503. It can be seen that magnitude 503 is double the amplitude of periodic sensor information 500. Periodic sensor information 510 has a trough 511, a crest 512, and a magnitude 513. It can be seen that magnitude 513 is double the amplitude of periodic sensor information 510.

In some circumstances, a sensor may indicate pressure readings by way of a voltage signal. For example, the sensor may be a piezoelectric pressure sensor. In some circumstances, as previously described, sensor information may be subject to error. For example, if the sensor information is periodic sensor information comprised by a variable voltage signal, the signal may have noise introduced into the signal from an external noise source, biased to a DC voltage from a power supply, and/or the like. For instance, noise may appear in the sensor information due to high frequency effects, low frequency oscillations, reflections, and/or the like.

The example of FIG. 5B illustrates periodic sensor information 520 and zero volt reference 524. Periodic sensor information 520 has a trough 521, a crest 522, and a magnitude 523. It can be seen in the example of FIG. 5B that periodic sensor information 520 is a noisy sine wave, and has a positive DC bias above zero volt reference 524.

In circumstances such as these, it may be desirable to filter the sensor information. For example, filtering the sensor information may help alleviate noise, remove the effects of DC bias, and/or the like. For example, filtering the sensor information may help alleviate noise, remove the effects of DC bias, and/or the like. For example, sensor information 520 may be filtered with a low pass filter to remove high frequency noise, filtered with a high pass filter to remove DC bias, and/or the like.

The example of FIG. 5C illustrates periodic sensor information 530 and zero volt reference 534. Periodic sensor information 530 has a trough 531, a crest 532, and a magnitude 533. It can be seen in the example of FIG. 5C that periodic sensor information 530 is a normal sine wave, and has no DC bias with respect to zero volt reference 534.

As previously described, sensor information may have noise and a DC bias similar to sensor information 520 in the example of FIG. 5B. As previously described, filtering the sensor information may help alleviate noise, remove the effects of DC bias, and/or the like. For example, sensor information 520 may be filtered with a low pass filter to remove high frequency noise, filtered with a high pass filter to remove DC bias, and/or the like. In circumstances where sensor information 520 is filtered, the resulting sensor information may be similar to sensor information 530 in the example of FIG. 5C.

In circumstances where the sensor information is periodic sensor information, it may be desirable to filter the sensor information based, at least in part, on the frequency of the periodic actuation. For example, if a pressure change magnitude is being measured based, at least in part, on a periodic actuation, the sensor information may have a frequency approximately equal to the frequency of the periodic actuation. In circumstances such as these, a filter such as a band pass filter with a narrow pass band centered at the periodic actuation frequency may help to reduce noise in the sensor information. In at least one example embodiment, determination of a pressure change magnitude comprises filtering the sensor information based, at least in part, on the periodic actuation.

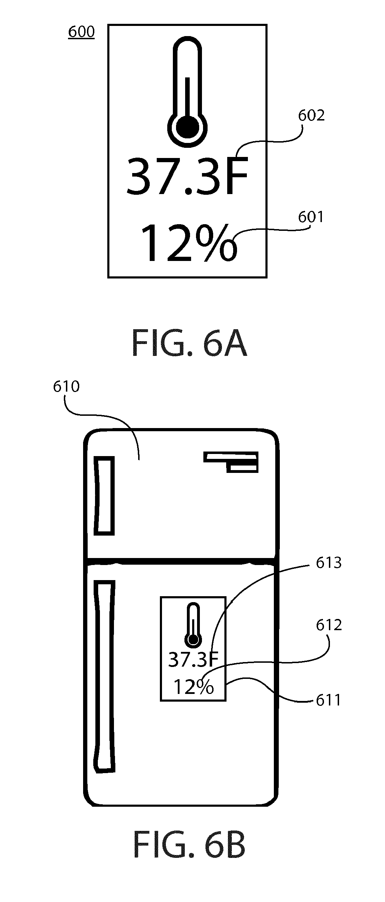

FIGS. 6A-6D are diagrams illustrating display of information including volumetric capacity according to at least one example embodiment. The examples of FIGS. 6A-6D are merely examples and do not limit the scope of the claims. For example, the type of display may vary, the location of display may vary, the number displays may vary, and/or the like.

As previously described, in some circumstances it may be desirable to determine the volumetric capacity of an enclosed volume, such as a refrigerator. For example, a user of the refrigerator may desire to know status information related to the refrigerator, such as the current temperature of a refrigerated compartment, the current volumetric capacity of the refrigerator, and/or the like. For instance, the user may desire to know how much space is available within a refrigerator and the current temperature of a compartment within the refrigerator for storing food items before purchasing additional food items. As such, it may be desirable to cause display of information such as temperature, the volumetric capacity, and/or the like such that the user may perceive the information in a manner that is easy and intuitive. In this manner, a user of the refrigerator may view the displayed information, and be informed of the volumetric capacity, the temperature of a compartment, and/or the like of the refrigerator. In at least one example embodiment, an apparatus causes display of a volumetric capacity of an enclosed volume.

The example of FIG. 6A illustrates display 600. Display 600 may be similar as described regarding FIG. 1. In the example of FIG. 6A, display 600 is displaying volumetric capacity 601 and other information, illustrated as temperature 602. Display 600 may be a display associated with any apparatus. For example, display 600 may be a display housed on, attached to, associated with, or comprised by an enclosed volume, a container, an appliance, a refrigerator, a mobile phone, and/or the like. In the example of FIG. 6A, volumetric capacity 601 is displayed as a percentage. Volumetric capacity 601 may indicate an occupied capacity of an enclosed volume (i.e., 12% of the enclosed volume is occupied or used with about 88% remaining or available) or its remaining capacity (i.e., 12% of the enclosed volume is available or remaining with about 88% occupied or used). It should be understood, however, that a volumetric capacity may be displayed in any format. For example, a volumetric capacity may be displayed as an actual volume, such as cubic meters, liters, etc., a graphical indication of volume, such as a bar graph, a pie chart, etc., a relative food item volume, such as gallon milk jugs, soda cans, eggs, etc., and/or the like.

In some circumstances, the volumetric capacity of an enclosed volume may not be easily observable. For example, the enclosed volume may be opaque. In other circumstances, the volumetric capacity may be observable, but the manner in which the volumetric capacity may be observed may be undesirable. For example, in circumstances where the enclosed volume is a compartment of a refrigerator and the volumetric capacity on a display that is positioned on the interior of the enclosed volume, it may be beneficial to temporarily open the compartment to observe the volumetric capacity of the compartment. In such circumstances, temporarily opening the compartment may cause a waste of energy, loss of refrigeration if the compartment is refrigerated, and/or the like. In circumstances such as these, it may be desirable to cause display of the volumetric capacity on a display that is positioned on the exterior of the enclosed volume. In this manner, a user may view the volumetric capacity of the enclosed volume without direct observation of the volumetric capacity. In at least one example embodiment, an apparatus comprising an enclosed volume causes display of the volumetric capacity of the enclosed volume on the apparatus.

The example of FIG. 6B illustrates an apparatus 610 comprising a display 611. Even though the example of FIG. 6B illustrates apparatus 610 as a refrigerator, apparatus 610 may be any type of apparatus. For example, apparatus 610 may be a microwave oven, a washing machine, a deep freezer, and/or the like. Display 611 may be similar as described regarding FIG. 1. In the example of FIG. 6B, display 611 is displaying volumetric capacity 612 and temperature 613. In the example of FIG. 6B, volumetric capacity 612 is displayed as a percentage. It should be understood, however, that a volumetric capacity may be displayed in any format. For example, a volumetric capacity may be displayed as an actual volume, such as cubic meters, liters, etc., a graphical indication of volume, such as a bar graph, a pie chart, etc., a relative food item volume, such as gallon milk jugs, soda cans, eggs, etc., and/or the like.

As previously described, in some circumstances, information associated with an enclosed volume, such as the volumetric capacity of the enclosed volume may not be easily observable. For example, a user of the enclosed volume may be at a location other than the location of the enclosed volume. In another example, the enclosed volume may lack a display. In such circumstances, a user may desire to know, for example, the volumetric capacity of the enclosed volume. For example, as previously described, the enclosed volume may be a compartment of a refrigerator. In circumstances such as these, it may be desirable to send the volumetric capacity along with other information (e.g., temperature, image data, video data, audio data, etc.) of or associated with the enclosed volume to a separate apparatus. For example, the volumetric capacity and/or other information may be sent to a cloud server, a mobile phone, a remote display, and/or the like. In this manner, a user of the separate apparatus may view the volumetric capacity of the enclosed volume by way of the separate apparatus. For example, in circumstances where the separate apparatus is a mobile phone, the mobile phone may display the received volumetric capacity and/or other information. In another example, in circumstances where the separate apparatus is a cloud server, the cloud server may publish the received volumetric capacity and/or other information on a website, forward the volumetric capacity and/or other information to a different separate apparatus, and/or the like. In this manner, a user of the enclosed volume may be informed of the volumetric capacity and/or other information of the enclosed volume at a location remote from the enclosed volume. In at least one example embodiment, volumetric capacity and/or other information of the enclosed volume is sent to a separate apparatus. Hereinafter, for simplicity, "volumetric capacity" refers to the volumetric capacity and/or any other information of and associated with an enclosed volume.

In some circumstances, at least a portion of volumetric capacity in an enclosed volume may be unusable. For example, in some circumstances, the volumetric capacity of an enclosed volume may have a particular shape, size, and/or the like. For example, in circumstances where the enclosed volume is a refrigerated compartment of a refrigerator, the volumetric capacity may comprise the space around odd shaped contained objects within the refrigerated compartment. In circumstances such as these, it may be desirable to capture an image of at least part of the enclosed volume. For example, a user viewing a captured image of the enclosed volume may have a better understanding of how the volumetric capacity of the enclosed volume may be utilized. For example, in circumstances where the enclosed volume is the refrigerated compartment of a refrigerator, a user of the refrigerator may avoid purchasing bulky items that may not fit within the shape of the volumetric capacity, even in circumstances where the volume of the item does not exceed the volumetric capacity. In at least one example embodiment, the apparatus captures an image of at least part of the enclosed volume.

The capturing of an image may be based, at least in part, on an event. For example, an image may be captured based on the enclosed volume being temporarily opened, based on closing of a temporarily opened enclosed volume, and/or the like. In some circumstances, images may be captured by multiple camera modules. For example, a camera module may be used for one or more compartments of a refrigerator. In this manner, a user may see a particular view of the enclosed volume, the entirety of the enclosed volume, and/or the like. For example, if the enclosed volume is a refrigerator, the user may select a view of the door, or the meat compartment, and/or the like. In some circumstances, a wide angle lens, a telephoto lens, and/or the like may be used in conjunction with a camera module. In some circumstances, a particular lens may cause distortion of an image captured by the camera module. In circumstances such as these, image processing may be utilized to reduce and/or remove distortion from the captured image before the image is displayed.

As previously described, in some circumstances one or more images of at least part of an enclosed volume may be captured (e.g., an image of one storage area of the enclosed volume and another image of another storage area near the door of the enclosed volume). It may be desirable to cause display of the image or images of at least part of the enclosed volume on the enclosed volume. For example, a user does not have to temporarily open the enclosed volume, such as a refrigerated compartment to observe the volumetric capacity of the refrigerated compartment. The displayed image or images allow a user to view the size, shape, and/or the like of the volumetric capacity of the enclosed volume without direct observation of the volumetric capacity. In at least one example embodiment, an apparatus comprising an enclosed volume causes display of at least an image of at least part of the enclosed volume on the apparatus (e.g., on the exterior of the apparatus). Hereinafter, one or more images may be referred to in the singular form of "image", an image, or the image.

As previously described, a user of the enclosed volume may be at a location remote from the enclosed volume. In circumstances such as these, it may be desirable to transmit an image of the enclosed volume to a separate apparatus. In this manner, the user may view the image by way of the separate apparatus. For example, in circumstances where the separate apparatus is a mobile phone, the mobile phone may display the received image of the enclosed volume. In another example, in circumstances where the separate apparatus is a cloud server, the cloud server may publish the received image on a website, forward the received image to a different separate apparatus, and/or the like. In this manner, a user of the enclosed volume may be informed of the size, shape, and or the like of the volumetric capacity of the enclosed volume at a location remote from the enclosed volume. In at least one example embodiment, an image of at least part of an enclosed volume is sent to a separate apparatus.

Often, when an enclosed volume is temporarily opened, the volumetric capacity may change, the shape of the volumetric capacity may change, the size of the volumetric capacity may change, and/or the like. For example, in circumstances where the enclosed volume is a compartment of a refrigerator, a user of the refrigerator may open the refrigerator, add and/or remove contained objects within the refrigerator, and close the refrigerator. As can be seen from this example, the opening of an enclosed volume may be a signal that the volumetric capacity of the enclosed volume has changed, the shape of the volumetric capacity has changed, the size of the volumetric capacity has changed, the temperature of the enclosed volume may have changed, and/or the like. As previously described, it may be desirable to capture an image of at least part of an enclosed volume. In circumstances such as these, it may be desirable to capture an image of at least part of an enclosed volume based, at least in part, on a determination that the enclosed volume has been opened. In this manner, the image may reflect a current state and/or configuration of the enclosed volume. In at least one example embodiment, an image of at least part of the enclosed volume is captured based, at least in part, on a determination that the enclosed volume has been opened.

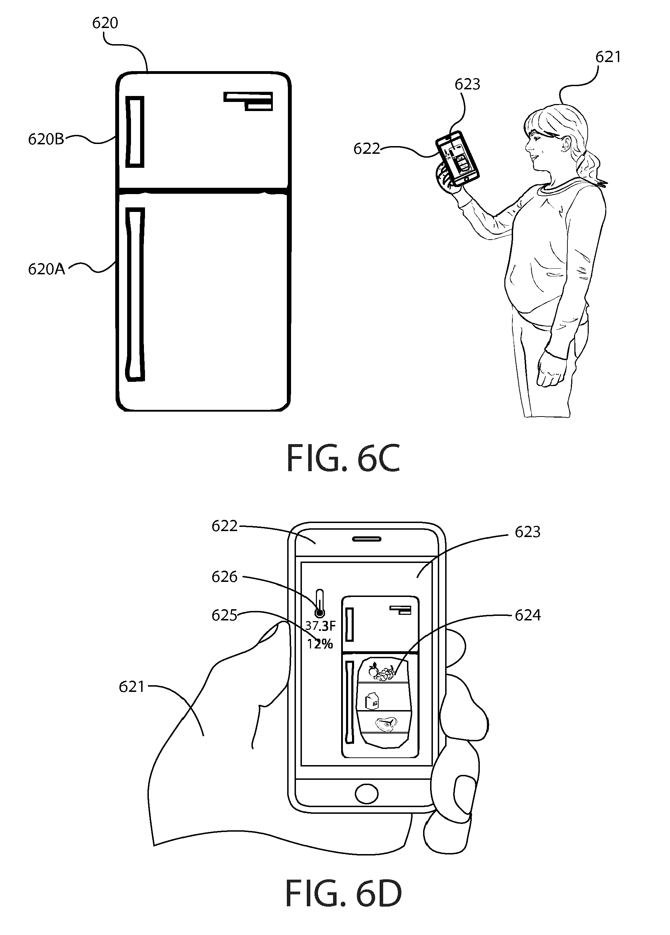

The example of FIGS. 6C-6D illustrates apparatus 620 and user 621. It should be understood in the example of FIGS. 6C-6D that apparatus 620 comprises an enclosed volume. Even though the example of FIGS. 6C-6D illustrates apparatus 620 as a refrigerator, apparatus 620 may be any type of apparatus. For example, apparatus 620 may be a microwave oven, a washing machine, a deep freezer, an enclosed volume or enclosable volume in a vehicle, and/or the like.

In the example of FIGS. 6C-6D, user 621 is holding separate apparatus 622. Separate apparatus 622 may be similar as described regarding FIG. 1 and FIG. 2. It can be seen in the example of FIGS. 6C-6D that separate apparatus 622 comprises a display 623. Display 623 may be similar as described regarding FIG. 1.

In the example of FIG. 6D, display 623 is displaying, for example, image 624, volumetric capacity 625, and temperature 626. The separate apparatus 622 may also be provided with other information (not shown) of or associated with the apparatus 620 for displaying on display 623. In the example of FIG. 6C, image 624 comprises an image of a least part of an enclosed volume comprised by apparatus 620. It should be understood that volumetric capacity 625 corresponds with the volumetric capacity of an enclosed volume comprised by apparatus 620. In the example of FIG. 6C, volumetric capacity 625 is displayed as a percentage. It should be understood, however, that a volumetric capacity may be displayed in any format. For example, a volumetric capacity may be displayed as an actual volume, such as cubic meters, liters, etc., a graphical indication of volume, such as a bar graph, a pie chart, etc., a relative food item volume, such as gallon milk jugs, soda cans, eggs, etc., and/or the like.

In some circumstances, a user may desire to interact with an enclosed volume by way of an augmented reality system. For example, a user may wish for a separate apparatus, such as a head mounted display, a mobile telephone, and/or the like to display information about the enclosed volume. For example, the separate apparatus may display the volumetric capacity of the enclosed volume. In circumstances such as these, it may be desirable to provide a fiducial marker that identifies the enclosed volume. A fiducial marker may refer to object, symbol, and/or the like placed in the field of view of a camera module which appears in an image captured by the camera module, for use as a point of reference, identification, measurement, and/or the like. For example, the fiducial marker may be a barcode, a QR code, a serial number, and/or the like. A fiducial marker may refer to a wireless signal, such as an RFID signal, a Bluetooth signal, and/or the like for use as a point of reference, identification, measurement, and/or the like.

The fiducial marker may be used to associate a volumetric capacity, and image, and/or the like with the enclosed volume. For instance, in the example of FIG. 6C-6D, one or more fiducial markers (e.g., a visual one and a wireless one) may be placed on or near apparatus 620. Separate apparatus 622 may identify the fiducial marker with a camera module or another module (e.g., a wireless module) comprised by separate apparatus 622. For example, user 621 holds up the separate apparatus 622 with one of its cameras pointing toward or focusing on apparatus 620. Based on one or more fiducial markers detected by the separate apparatus 622 and/or its modules, a stored image previously captured of apparatus 620 identified by the separate apparatus 622 and/or a third apparatus and shown on the display of the separate apparatus 622. In some examples, the apparatus 620 shown on the display of the separate apparatus 622 may be a live image (real-time image) as seen through the lens of a camera of separate apparatus 622.

Based on one or more fiducial markers detected by the separate apparatus 622 and/or its modules, information, such as associate image 624, volumetric capacity 625, and temperature 626 as corresponding with apparatus 620 may be identified or determined by the separate apparatus 622 and/or a third apparatus and shown on the display of the separate apparatus 622. For example, image 624 may be a stored image or a newly captured image of a compartment 620A of apparatus 620. The image 624 is displayed aligned with the displaying of apparatus 620, e.g., with image 624 superimposed on top of compartment 620A of apparatus 620. In some examples, images, volumetric capacity, temperature, and/or other information associated with compartment 620B may be available and displayed (not shown).

In some circumstances, a user may desire to interact with multiple enclosed volumes by way of an augmented reality system. In circumstances such as these, each enclosed volume may be associated with a particular fiducial marker or particular set of fiducial markers. In this manner, the user may interact with each enclosed volume separately, simultaneously, and/or the like by way of the augmented reality system similar as previously described. The enclosed volumes may be at the same location, at different locations, and/or the like. For example, there is another apparatus (Second620, not shown) that provides or allows the user to access its information (e.g., images, volumetric capacity, temperature, etc.). Second620 may be adjacent to apparatus 620, in a different room, or in a different city. When the user moves the separate apparatus 622 to points its camera to the Second620, the user may see the information (e.g., images, volumetric capacity, temperature, etc.) associated with the Second620 similar to seeing the information associated with apparatus 620 shown in FIG. 6D.

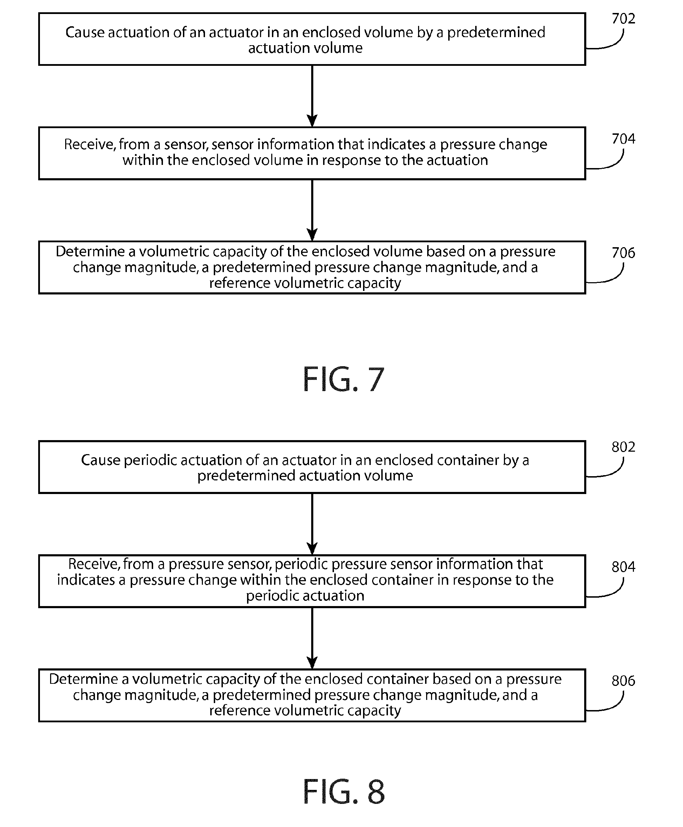

FIG. 7 is a flow diagram illustrating activities associated with determination of volumetric capacity according to at least one example embodiment. In at least one example embodiment, there is a set of operations that corresponds with the activities of FIG. 7. An apparatus, for example electronic apparatus 10 of FIG. 1, or a portion thereof, may utilize the set of operations. The apparatus may comprise means, including, for example processor 11 of FIG. 1, for performance of such operations. In an example embodiment, an apparatus, for example electronic apparatus 10 of FIG. 1, is transformed by having memory, for example memory 12 of FIG. 1, comprising computer code configured to, working with a processor, for example processor 11 of FIG. 1, cause the apparatus to perform set of operations of FIG. 7.

As previously described, in some circumstances it may be desirable to determine a volumetric capacity of an enclosed volume.

At block 702, the apparatus causes actuation of an actuator in an enclosed volume by a predetermined actuation volume. The actuation, the actuator, the enclosed volume, and the predetermined actuation volume may be similar as described regarding FIG. 1, FIG. 2, FIGS. 3A-3B, and FIGS. 4A-4D.

At block 704, the apparatus receives, from a sensor, sensor information that indicates a pressure change within the enclosed volume in response to the actuation. The pressure change comprises a pressure change magnitude. The sensor, the sensor information, the pressure change, and the pressure change magnitude may be similar as described regarding FIGS. 3A-3B, FIGS. 4A-4D, and FIGS. 5A-5C.

At block 706, the apparatus determines a volumetric capacity of the enclosed volume based, at least in part, on the pressure change magnitude, a predetermined pressure change magnitude, and a reference volumetric capacity. The volumetric capacity, the predetermined pressure change magnitude, and the reference volumetric capacity may be similar as described regarding FIGS. 3A-3B and FIGS. 4A-4D.

FIG. 8 is a flow diagram illustrating activities associated with determination of volumetric capacity according to at least one example embodiment. In at least one example embodiment, there is a set of operations that corresponds with the activities of FIG. 8. An apparatus, for example electronic apparatus 10 of FIG. 1, or a portion thereof, may utilize the set of operations. The apparatus may comprise means, including, for example processor 11 of FIG. 1, for performance of such operations. In an example embodiment, an apparatus, for example electronic apparatus 10 of FIG. 1, is transformed by having memory, for example memory 12 of FIG. 1, comprising computer code configured to, working with a processor, for example processor 11 of FIG. 1, cause the apparatus to perform set of operations of FIG. 8.

As previously described, in some circumstances it may be desirable to determine a volumetric capacity of an enclosed container.

At block 802, the apparatus the apparatus causes periodic actuation of an actuator in an enclosed container by a predetermined actuation volume. The periodic actuation, the actuator, the enclosed container, and the predetermined actuation volume may be similar as described regarding FIG. 1, FIG. 2, FIGS. 3A-3B, FIGS. 4A-4D, and FIGS. 5A-5C.

At block 804, the apparatus the apparatus receives, from a pressure sensor, periodic pressure sensor information that indicates a pressure change within the enclosed volume in response to the periodic actuation. The pressure change comprises a pressure change magnitude. The pressure sensor, the periodic pressure sensor information, the pressure change, and the pressure change magnitude may be similar as described regarding FIGS. 3A-3B, FIGS. 4A-4D, and FIGS. 5A-5C.

At block 806, the apparatus determines a volumetric capacity of the enclosed volume based, at least in part, on the pressure change magnitude, a predetermined pressure change magnitude, and a reference volumetric capacity. The volumetric capacity, the predetermined pressure change magnitude, and the reference volumetric capacity may be similar as described regarding FIGS. 3A-3B and FIGS. 4A-4D.

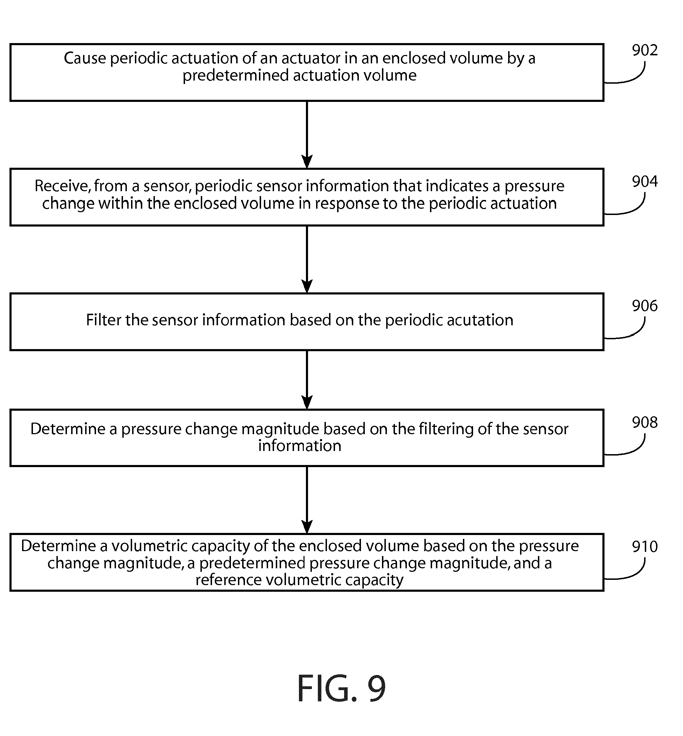

FIG. 9 is a flow diagram illustrating activities associated with filtering of sensor information according to at least one example embodiment. In at least one example embodiment, there is a set of operations that corresponds with the activities of FIG. 9. An apparatus, for example electronic apparatus 10 of FIG. 1, or a portion thereof, may utilize the set of operations. The apparatus may comprise means, including, for example processor 11 of FIG. 1, for performance of such operations. In an example embodiment, an apparatus, for example electronic apparatus 10 of FIG. 1, is transformed by having memory, for example memory 12 of FIG. 1, comprising computer code configured to, working with a processor, for example processor 11 of FIG. 1, cause the apparatus to perform set of operations of FIG. 9.

As previously described, in some circumstances it may be desirable to filter sensor information.

At block 902, the apparatus causes periodic actuation of an actuator in an enclosed volume by a predetermined actuation volume. The periodic actuation, the actuator, the enclosed volume, and the predetermined actuation volume may be similar as described regarding FIG. 1, FIG. 2, FIGS. 3A-3B, FIGS. 4A-4D, and FIGS. 5A-5C.

At block 904, the apparatus the apparatus receives, from a sensor, periodic sensor information that indicates a pressure change within the enclosed volume in response to the periodic actuation. The pressure change comprises a pressure change magnitude. The sensor, the periodic sensor information, the pressure change, and the pressure change magnitude may be similar as described regarding FIGS. 3A-3B, FIGS. 4A-4D, and FIGS. 5A-5C.

At block 906, the apparatus filters the sensor information based, at least in part, on the periodic actuation. The filtering may be similar as described regarding FIGS. 5A-5C.

At block 908, the apparatus determines the pressure change magnitude based, at least in part on the filtering of the sensor information. The determination may be similar as described regarding FIGS. 3A-3B, FIGS. 4A-4D, and FIGS. 5A-5C.

At block 910, the apparatus determines a volumetric capacity of the enclosed volume based, at least in part, on the pressure change magnitude, a predetermined pressure change magnitude, and a reference volumetric capacity, similarly as described regarding block 706 of FIG. 7.

FIG. 10 is a flow diagram illustrating activities associated with sending volumetric capacity to a separate apparatus according to at least one example embodiment. In at least one example embodiment, there is a set of operations that corresponds with the activities of FIG. 10. An apparatus, for example electronic apparatus 10 of FIG. 1, or a portion thereof, may utilize the set of operations. The apparatus may comprise means, including, for example processor 11 of FIG. 1, for performance of such operations. In an example embodiment, an apparatus, for example electronic apparatus 10 of FIG. 1, is transformed by having memory, for example memory 12 of FIG. 1, comprising computer code configured to, working with a processor, for example processor 11 of FIG. 1, cause the apparatus to perform set of operations of FIG. 10.

As previously described, in some circumstances it may be desirable to send a volumetric capacity to a separate apparatus.

At block 1002, the apparatus causes actuation of an actuator in an enclosed volume by a predetermined actuation volume, similarly as described regarding block 702 of FIG. 7. At block 1004, the apparatus receives, from a sensor, sensor information that indicates a pressure change within the enclosed volume in response to the actuation, similarly as described regarding block 704 of FIG. 7. At block 1006, the apparatus determines a volumetric capacity of the enclosed volume based, at least in part, on a pressure change magnitude, a predetermined pressure change magnitude, and a reference volumetric capacity similarly as described regarding block 706 of FIG. 7.

At block 1008, the apparatus sends the volumetric capacity to a separate apparatus. The sending and the separate apparatus may be similar as described regarding FIG. 1, FIG. 2, and FIGS. 6A-6D

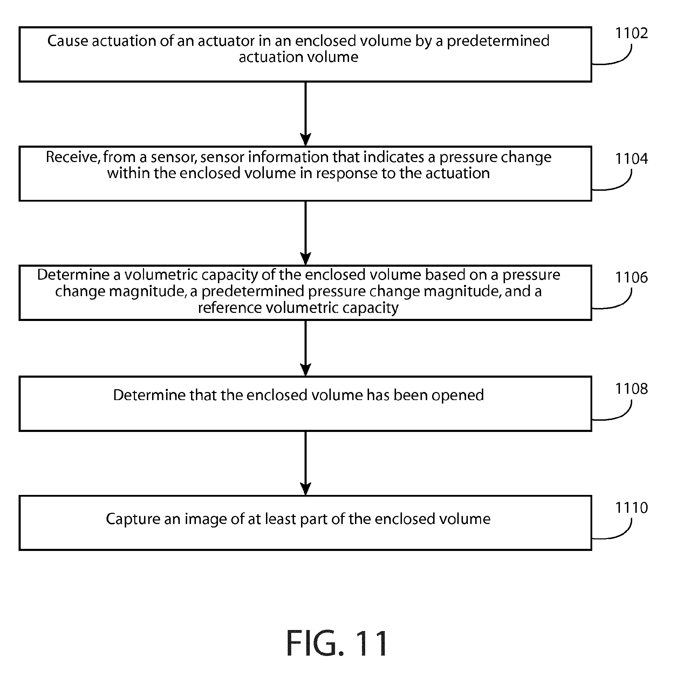

FIG. 11 is a flow diagram illustrating activities associated with capturing an image of at least part of an enclosed volume according to at least one example embodiment. In at least one example embodiment, there is a set of operations that corresponds with the activities of FIG. 11. An apparatus, for example electronic apparatus 10 of FIG. 1, or a portion thereof, may utilize the set of operations. The apparatus may comprise means, including, for example processor 11 of FIG. 1, for performance of such operations. In an example embodiment, an apparatus, for example electronic apparatus 10 of FIG. 1, is transformed by having memory, for example memory 12 of FIG. 1, comprising computer code configured to, working with a processor, for example processor 11 of FIG. 1, cause the apparatus to perform set of operations of FIG. 11.

As previously described, in some circumstances it may be desirable to capture an image of at least part of an enclosed volume.

At block 1102, the apparatus causes actuation of an actuator in an enclosed volume by a predetermined actuation volume, similarly as described regarding block 702 of FIG. 7. At block 1104, the apparatus receives, from a sensor, sensor information that indicates a pressure change within the enclosed volume in response to the actuation, similarly as described regarding block 704 of FIG. 7. At block 1106, the apparatus determines a volumetric capacity of the enclosed volume based, at least in part, on a pressure change magnitude, a predetermined pressure change magnitude, and a reference volumetric capacity similarly as described regarding block 706 of FIG. 7.

At block 1108, the apparatus determines that the enclosed volume has been opened. The determination may be similar as described regarding FIGS. 6A-6D.

At block 1110, the apparatus captures an image of at least part of the enclosed volume. The capturing and the image may be similar as described regarding FIG. 1 and FIGS. 6A-6D.

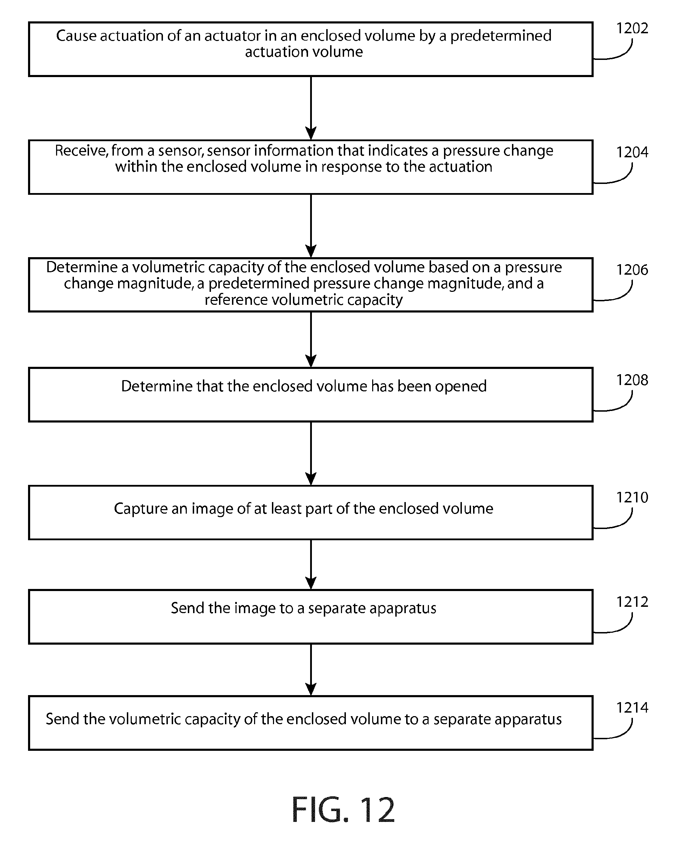

FIG. 12 is a flow diagram illustrating activities associated with sending an image to a separate apparatus according to at least one example embodiment. In at least one example embodiment, there is a set of operations that corresponds with the activities of FIG. 12. An apparatus, for example electronic apparatus 10 of FIG. 1, or a portion thereof, may utilize the set of operations. The apparatus may comprise means, including, for example processor 11 of FIG. 1, for performance of such operations. In an example embodiment, an apparatus, for example electronic apparatus 10 of FIG. 1, is transformed by having memory, for example memory 12 of FIG. 1, comprising computer code configured to, working with a processor, for example processor 11 of FIG. 1, cause the apparatus to perform set of operations of FIG. 12.

As previously described, in some circumstances, it may be desirable to send an image of at least part of an enclosed volume to a separate apparatus.

At block 1202, the apparatus causes actuation of an actuator in an enclosed volume by a predetermined actuation volume, similarly as described regarding block 702 of FIG. 7. At block 1204, the apparatus receives, from a sensor, sensor information that indicates a pressure change within the enclosed volume in response to the actuation, similarly as described regarding block 704 of FIG. 7. At block 1206, the apparatus determines a volumetric capacity of the enclosed volume based, at least in part, on a pressure change magnitude, a predetermined pressure change magnitude, and a reference volumetric capacity, similarly as described regarding block 706 of FIG. 7. At block 1208, the apparatus determines that the enclosed volume has been opened, similarly as described regarding block 1108 of FIG. 11. At block 1210, the apparatus captures an image of at least part of the enclosed volume, similarly as described regarding block 1110 of FIG. 11.

At block 1212, the apparatus sends the image to a separate apparatus. The sending and the separate apparatus may be similar as described regarding FIG. 1, FIG. 2, and FIGS. 6A-6D

At block 1214, the apparatus sends the volumetric capacity to a separate apparatus. The sending and the separate apparatus may be similar as described regarding FIG. 1, FIG. 2, and FIGS. 6A-6D

Embodiments of the subject matter may be implemented in software, hardware, application logic or a combination of software, hardware, and application logic. The software, application logic, and/or hardware may reside on the apparatus, a separate device, or a plurality of separate devices. If desired, part of the software, application logic, and/or hardware may reside on the apparatus, part of the software, application logic and/or hardware may reside on a separate device, and part of the software, application logic, and/or hardware may reside on a plurality of separate devices. In an example embodiment, the application logic, software or an instruction set is maintained on any one of various conventional computer-readable media.

If desired, the different functions discussed herein may be performed in a different order and/or concurrently with each other. For example, block 1212 of FIG. 12 may be performed after block 1214 of FIG. 12. Furthermore, if desired, one or more of the above-described functions may be optional or may be combined. For example, block 1212 of FIG. 12 may be optional and/or combined with block 1214 of FIG. 12.

Although various aspects of the subject matter are set out in the independent claims, other aspects of the subject matter comprise other combinations of features from the described embodiments and/or the dependent claims with the features of the independent claims, and not solely the combinations explicitly set out in the claims.

It is also noted herein that while the above describes example embodiments of the subject matter, these descriptions should not be viewed in a limiting sense. Rather, there are variations and modifications which may be made without departing from the scope of the present subject matter as defined in the appended claims.

**Claims**

1. A method comprising:

   causing actuation of an actuator in an enclosed volume by a predetermined actuation volume;
   receiving, from a sensor, sensor information that indicates a pressure change within the enclosed volume in response to the actuation, the pressure change comprising a pressure change magnitude; and
   determining a volumetric capacity of the enclosed volume based, at least in part, on the pressure change magnitude, a predetermined pressure change magnitude, and a reference volumetric capacity.

2. The method of claim 1, wherein:

   the actuation is a periodic actuation;
   the enclosed volume is an enclosed container;
   the sensor is a pressure sensor;
   the sensor information is periodic pressure sensor information that indicates a pressure change within the enclosed container that corresponds with the periodic actuation, the periodic pressure sensor information indicating the periodic change in pressure having a pressure change magnitude;
   the predetermined pressure change magnitude is indicative of the reference volumetric capacity of the enclosed container;
   the reference volumetric capacity is indicative of a predetermined amount of volume of the enclosed container that is absent a predetermined volume of one or more contained objects; and
   the volumetric capacity is indicative of an amount of volume of the enclosed container that is absent a volume of one or more contained objects.

3. The method of any of claims 1-2, wherein the sensor is a pressure sensor, the sensor information is periodic pressure sensor information, and the periodic pressure sensor information indicates a change in pressure that has the pressure change magnitude.

4. The method of any of claims 1-3, further comprising determining the pressure change magnitude based, at least in part, on the sensor information.

5. The method of claim 4, wherein determining the pressure change magnitude comprises filtering the sensor information based, at least in part, on the periodic actuation.

6. The method of any of claims 1-5, further comprising sending the volumetric capacity to a separate apparatus.

7. The method of any of claims 1-6, further comprising causing display of the volumetric capacity.

8. The method of any of claims 1-7, further comprising:

determining that the enclosed volume has been opened; and
capturing of an image of at least part of the enclosed volume based, at least in part, on the determination the enclosed volume has been opened.

9. The method of claim 8, further comprising sending the image to a separate apparatus.

10. The method of any of claims 8-9, further comprising causing display of the image.

11. The method of any of claims 1-10, wherein the enclosed volume is a compartment of a refrigerator.

12. The method of any of claims 1-10, wherein the predetermined actuation volume is an amount of volume displaced by actuation of the actuator.

13. An apparatus comprising means for performing the method of any of the preceding claims.

14. The apparatus of claim 13, wherein the means for performing the method comprise at least one processor and at least one memory, the memory comprising machine-readable instructions, that when executed cause the apparatus to perform the method of any of claims 1-12.

15. At least one computer readable medium comprising instructions that, when executed, perform the method of any of claims 1-12.

| Input Device 13 | | Communication Device 15 |
| :---: | :---: | :---: |

Processor
11

10

| Memory 12 | | Output Device 14 |
| :---: | :---: | :---: |

# FIG. 1

| Apparatus 202 | —212— | Apparatus 204 |
| :---: | :---: | :---: |

# FIG. 2

FIG. 3A

FIG. 3B

400

401

410

411

402

# FIG. 4A

400

401

410

402

# FIG. 4B

FIG. 4C

FIG. 4D

FIG. 5A

FIG. 5B

FIG. 5C

600

37.3F — 602

12% — 601

FIG. 6A

610

613

612

611

37.3F

12%

FIG. 6B

620

620B

620A

FIG. 6C

621

623

622

622

626

625

37.3F
12%

621

623

624

FIG. 6D

Cause actuation of an actuator in an enclosed volume by a predetermined actuation volume — 702

Receive, from a sensor, sensor information that indicates a pressure change within the enclosed volume in response to the actuation — 704

Determine a volumetric capacity of the enclosed volume based on a pressure change magnitude, a predetermined pressure change magnitude, and a reference volumetric capacity — 706

# FIG. 7

Cause periodic actuation of an actuator in an enclosed container by a predetermined actuation volume — 802

Receive, from a pressure sensor, periodic pressure sensor information that indicates a pressure change within the enclosed container in response to the periodic actuation — 804

Determine a volumetric capacity of the enclosed container based on a pressure change magnitude, a predetermined pressure change magnitude, and a reference volumetric capacity — 806

# FIG. 8

Cause periodic actuation of an actuator in an enclosed volume by a predetermined actuation volume — 902

Receive, from a sensor, periodic sensor information that indicates a pressure change within the enclosed volume in response to the periodic actuation — 904

Filter the sensor information based on the periodic acutation — 906

Determine a pressure change magnitude based on the filtering of the sensor information — 908

Determine a volumetric capacity of the enclosed volume based on the pressure change magnitude, a predetermined pressure change magnitude, and a reference volumetric capacity — 910

FIG. 9

Cause actuation of an actuator in an enclosed volume by a predetermined actuation volume — 1002

Receive, from a sensor, sensor information that indicates a pressure change within the enclosed volume in response to the actuation — 1004

Determine a volumetric capacity of the enclosed volume based on a pressure change magnitude, a predetermined pressure change magnitude, and a reference volumetric capacity — 1006

Send the volumetric capacity of the enclosed volume to a separate apparatus — 1008

FIG. 10

Cause actuation of an actuator in an enclosed volume by a predetermined actuation volume — 1102

Receive, from a sensor, sensor information that indicates a pressure change within the enclosed volume in response to the actuation — 1104

Determine a volumetric capacity of the enclosed volume based on a pressure change magnitude, a predetermined pressure change magnitude, and a reference volumetric capacity — 1106

Determine that the enclosed volume has been opened — 1108

Capture an image of at least part of the enclosed volume — 1110

FIG. 11

| Cause actuation of an actuator in an enclosed volume by a predetermined actuation volume | 1202 |

| Receive, from a sensor, sensor information that indicates a pressure change within the enclosed volume in response to the actuation | 1204 |

| Determine a volumetric capacity of the enclosed volume based on a pressure change magnitude, a predetermined pressure change magnitude, and a reference volumetric capacity | 1206 |

| Determine that the enclosed volume has been opened | 1208 |

| Capture an image of at least part of the enclosed volume | 1210 |

| Send the image to a separate apapratus | 1212 |

| Send the volumetric capacity of the enclosed volume to a separate apparatus | 1214 |

FIG. 12

Europäisches
Patentamt

European
Patent Office

Office européen
des brevets

# EUROPEAN SEARCH REPORT

Application Number

EP 14 20 0693

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | US 4 770 033 A (NICOLAI WALTER [DE])<br>13 September 1988 (1988-09-13)<br>* column 1, line 8 - line 21 *<br>* column 2, line 40 - line 59 *<br>* column 3, line 46 - column 4, line 9 *<br>* column 10, line 16 - column 11, line 38 *<br>* column 7, line 36 - line 55; figures 5,7 * | 1-4,6,7,<br>12-15<br>5,8-11 | INV.<br>G01F17/00 |
| X | US 2007/264130 A1 (MALLETT SCOTT [US])<br>15 November 2007 (2007-11-15)<br>* paragraphs [0028] - [0035], [0047] -<br>[0049], [0054], [0055]; figure 4 * | 1,13 | |
| Y | DE 197 50 620 A1 (SIEMENS AG [DE])<br>2 June 1999 (1999-06-02)<br>* page 5, line 11 - line 29; figure 1 * | 5 | |
| Y | EP 2 180 299 A1 (WHIRLPOOL CO [US])<br>28 April 2010 (2010-04-28)<br>* paragraphs [0081], [0088], [0133],<br>[0135], [0200], [0202]; figure 1 * | 8-11 | TECHNICAL FIELDS SEARCHED (IPC)<br><br>G01F |

The present search report has been drawn up for all claims

| Place of search | Date of completion of the search | Examiner |
|---|---|---|
| Munich | 24 June 2015 | Papantoniou, E |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 14 20 0693

This annex lists the patent family members relating to the patent documents cited in the above-mentioned European search report.
The members are as contained in the European Patent Office EDP file on
The European Patent Office is in no way liable for these particulars which are merely given for the purpose of information.

24-06-2015

| Patent document cited in search report | | Publication date | Patent family member(s) | | Publication date |
|---|---|---|---|---|---|
| US 4770033 | A | 13-09-1988 | DE | 3540768 C1 | 16-04-1987 |
| | | | JP | H0613986 B2 | 23-02-1994 |
| | | | JP | S62175622 A | 01-08-1987 |
| | | | US | 4770033 A | 13-09-1988 |
| US 2007264130 | A1 | 15-11-2007 | NONE | | |
| DE 19750620 | A1 | 02-06-1999 | DE | 19750620 A1 | 02-06-1999 |
| | | | FR | 2771170 A1 | 21-05-1999 |
| EP 2180299 | A1 | 28-04-2010 | BR | PI0905201 A2 | 22-03-2011 |
| | | | CN | 101726343 A | 09-06-2010 |
| | | | EP | 2180299 A1 | 28-04-2010 |

EPO FORM P0459

For more details about this annex : see Official Journal of the European Patent Office, No. 12/82